(19) Europäisches Patentamt
European Patent Office
Office européen des brevets

(11) **EP 2 199 742 B1**

(12) **FASCICULE DE BREVET EUROPEEN**

(45) Date de publication et mention
de la délivrance du brevet:
**22.04.2020 Bulletin 2020/17**

(51) Int Cl.:
*G01C 19/58* *(2006.01)*      *G01P 15/08* *(2006.01)*
*G01P 15/14* *(2013.01)*

(21) Numéro de dépôt: **09179165.7**

(22) Date de dépôt: **15.12.2009**

(54) **capteur gyrométrique et accélérométrique à ondes de matière intégré sur puce atomique**

Auf einem Atomchip integrierter gyrometrischer und akzelerometrischer Materiewellensensor

Matter-wave gyrometric and accelerometric sensor integrated on an atomic chip

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **16.12.2008 FR 0807073**

(43) Date de publication de la demande:
**23.06.2010 Bulletin 2010/25**

(73) Titulaire: **Thales**
**92400 Courbevoie (FR)**

(72) Inventeurs:
• **Schwartz, Sylvain**
**78470 Saint-Remy Les Chevreuse (FR)**
• **Pocholle, Jean-Paul**
**91290 La Norville (FR)**

(74) Mandataire: **Bréda, Jean-Marc et al
Marks & Clerk France
Conseils en Propriété Industrielle
Immeuble " Visium "
22 Avenue Aristide Briand
94117 Arcueil Cedex (FR)**

(56) Documents cités:
**DE-A1- 3 504 278     FR-A- 2 826 446
US-A- 4 992 656**

• ZATEZALO A ET AL: "Bose-Einstein
interferometry and its applications to precision
undersea navigation" POSITION, LOCATION
AND NAVIGATION SYMPOSIUM, 2008 IEEE/ION,
IEEE, PISCATAWAY, NJ, USA, 5 mai 2008
(2008-05-05), pages 940-950, XP031340859 ISBN:
978-1-4244-1536-6
• LESANOVSKY I ET AL: "Adiabatic
radio-frequency potentials for the coherent
manipulation of matter waves" PHYSICAL
REVIEW A (ATOMIC, MOLECULAR, AND
OPTICAL PHYSICS) APS THROUGH AIP USA,,
vol. 73, no. 3, 23 mars 2006 (2006-03-23), pages
33619-1, XP002535766

EP 2 199 742 B1

**Description**

Le domaine général de l'invention est celui de la gyrométrie, c'est-à-dire le domaine de la mesure des vitesses de rotation. Plus précisément, le domaine technique de l'invention est celui des gyromètres à ondes de matière. Dans ces gyromètres, la mesure de la vitesse repose sur la mesure du déphasage $\Delta\varphi$ induit par effet Sagnac entre deux ondes de matière contrarotatives dans un référentiel tournant à la vitesse angulaire $\dot{\theta}$, $\Delta\varphi$ étant donné par :

$$\Delta\varphi = \frac{4Am}{\hbar}\dot{\theta} \, ,$$

où $A$ est l'aire inscrite dans l'interféromètre, m la masse des atomes et $h = 2\pi\hbar$ la constante de Planck. L'exploitation de l'effet Sagnac atomique décrit ci-dessus constitue une rupture technologique dans le domaine des gyromètres qui utilisent classiquement l'effet Sagnac optique, puisque le rapport entre les déphasages Sagnac atomique et optique est donné, toutes choses égales par ailleurs, par la quantité $mc^2/(hv)$ et est de l'ordre de $10^{10}$ ou $10^{11}$ selon le type d'atome et la fréquence optique $v$ considérée.

Les meilleurs gyromètres actuellement disponibles commercialement sont fondés sur l'effet Sagnac optique, qui se produit soit dans une cavité laser active soit dans un interféromètre fibré passif. Dans le premier cas, on parle de gyrolasers et dans le second de gyromètres à fibre optique. Le remplacement des ondes optiques par des ondes de matière entraîne un énorme gain en sensibilité, même si celui-ci est en partie contrebalancé par la diminution du rapport signal à bruit et de l'aire de l'interféromètre. Les gyromètres à onde de matière sont une réalité expérimentale depuis 1997, date de la première mesure de la rotation terrestre avec ce type de dispositif. On se reportera à l'article de T. Gustavson et al., Phys. Rev. Lett. 78 (1997) sur ce point. Aujourd'hui, plusieurs laboratoires ont construit des capteurs similaires, et les performances atteintes surpassent déjà celles des meilleurs gyromètres optiques (voir D. Durfee et al., Phys. Rev. Lett. 97, 240801 (2006)). Pour les évolutions futures, le potentiel d'amélioration reste de plusieurs ordres de grandeur.

Les gyromètres atomiques reposent sur l'utilisation d'ondes de matière. Ces dernières sont associées, d'après les lois de la mécanique quantique, à toute particule massive. La technique de l'interférométrie atomique permet de mesurer les déphasages entre paquets d'ondes de matière. Elle nécessite en particulier le refroidissement préalable des atomes à des températures voisines du zéro degré absolu, afin de limiter leur dispersion en vitesse. On appellera, dans la suite du texte, ces atomes refroidis atomes froids ou ultrafroids.

D'importants efforts ont été déployés ces dernières années pour intégrer une partie des fonctions de piégeage, de refroidissement et de manipulation d'atomes froids sur des dispositifs de type « puces », ces dernières présentant l'avantage de la compacité mais aussi d'un très bon contrôle des champs magnétiques nécessaires au système et d'une consommation électrique relativement faible. De plus, l'intérêt d'utiliser et d'intégrer des champs radiofréquences pour la manipulation cohérente des atomes, souligné dès 2000 dans un article de O. Zobay and B. Garraway, Two-Dimensional Atom Trapping in Field-Induced Adiabatic Potentials, Physical Review Letters 86, pages 1195-1198 (2001) a été récemment démontré expérimentalement par la séparation cohérente en deux parties égales d'un condensat de Bose-Einstein en 2006, ce qui constitue l'équivalent atomique d'une lame séparatrice pour un laser, composant-clé pour la réalisation d'interféromètres atomiques. On se reportera, pour plus d'informations à la publication de T. Schumm et al., Matter-wave interferometry in a double well on an atom chip, Nature Physics 1, pages 57-62 (2005).

Le document "ZATEZALO A ET AL: "Bose-Einstein interferometry and its applications to précision undersea navigation",POSITION, LOCATION AND NAVIGATION SYMPOSIUM, 2008 IEEE/ION, IEEE, PISCATAWAY, NJ, USA, 5 mai 2008 (2008-05-05), pages 940-950" décrit un gyromètre de type à ondes de matière comprenant une puce électronique comportant un plan de mesure, des moyens de génération, de capture et de refroidissement d'un nuage d'atomes ultrafroids, un piège à atomes permettant d'immobiliser le nuage d'atomes ultrafroids à une distance prédéterminée dudit plan de mesure, le piège comportant d'une part des fils conducteurs intégrés à ladite puce incluant un premier fil parcouru par un courant continu et d'autre part des moyens extérieurs de génération de champ magnétique résultant en un minimum local de champ magnétique, des moyens de contrôle et d'asservissement des différents moyens du gyromètre, ledit gyromètre comportant également des moyens de scission du nuage d'atomes en deux paquets ainsi que des moyens de déplacement spatial et de recombinaison des deux parties par diverses méthodes incluant l'utilisation de champs radio-fréquence ainsi que des moyens de mesure optique du déphasage introduit sur le nuage atomique après recombinaison.

Le gyromètre selon l'invention propose, en s'appuyant sur les technologies existantes en matière de gyrométrie atomique et de manipulation cohérente d'ondes de matière sur puces atomiques, une architecture originale de capteur, pour la mesure des vitesses de rotation locales ou des accélérations auxquelles est soumis le dispositif.

Plus précisément, l'invention a pour premier objet un gyromètre, de type à ondes de matière, selon la revendication 1, permettant la mesure de la vitesse de rotation selon un axe de mesure donné, ledit gyromètre comprenant au moins :

une puce électronique comportant un plan de mesure ;

des moyens de génération, de capture et de refroidissement d'un nuage d'atomes ultrafroids et un piège à atomes permettant d'immobiliser le nuage d'atomes ultrafroids à une distance prédéterminée dudit plan de mesure ;

le piège à atomes, comportant un ensemble de fils conducteurs et de bobinages extérieurs permettant la réalisation d'un minimum local de champ magnétique ; un tel piège peut par exemple consister en d'une part un premier fil conducteur intégré à ladite puce parcouru par un courant $I_{DC}$ continu et d'autre part des moyens de génération d'un champ magnétique homogène dont les lignes de champ sont, dans la zone du piège, parallèles au plan de mesure et perpendiculaires à la direction du premier fil conducteur ;

des moyens de scission du nuage atomique en deux paquets d'atomes, des moyens de déplacement desdits paquets, lesdits moyens permettant également la recombinaison des deux paquets en un seul nuage atomique, l'ensemble des deux paquets ayant parcouru une première aire fermée entre la scission et la recombinaison ;

des moyens de mesure optique du déphasage introduit sur le nuage atomique après recombinaison ;

des moyens électroniques de contrôle, de commande et d'asservissement des différents moyens du gyromètre ;

les moyens de scission et de déplacement comportant essentiellement le premier fil conducteur principal, un deuxième fil conducteur et un troisième fil conducteur sensiblement parallèles entre eux dans la zone du piège, le deuxième fil conducteur et le troisième fil conducteur disposés symétriquement de part et d'autre du premier fil, le second fil et le troisième fil étant traversés par des courants alternatifs de même amplitude, de même fréquence et de même sens, l'amplitude maximale et la fréquence desdits courants étant suffisantes pour créer au niveau du nuage atomique un champ magnétique alternatif d'intensité supérieure à l'intensité magnétique nécessaire à la scission du nuage atomique en deux paquets atomiques dans la direction de polarisation dudit champ magnétique, l'amplitude du courant continu $I_{DC}$ circulant dans le premier fil pouvant être changée au cours de la mesure.

L'invention a également pour objet un capteur, de type à ondes de matière, selon la revendication 2, de mesure de la vitesse de rotation et de l'accélération selon un axe et une direction donnés, ledit capteur comprenant au moins :

une puce électronique comportant un plan de mesure ;

des moyens de génération, de capture et de refroidissement d'au moins un premier et un second nuage d'atomes ultrafroids ;

un premier piège à atomes permettant d'immobiliser le premier nuage d'atomes ultrafroids à une première distance prédéterminée dudit plan de mesure, un second piège à atomes permettant d'immobiliser le second nuage d'atomes ultrafroids à une seconde distance prédéterminée dudit plan de mesure ;

le premier piège comportant un premier fil conducteur intégré à ladite puce parcouru par un premier courant $I_{DC}^A$ continu, le second piège comportant un quatrième fil conducteur intégré à ladite puce parcouru par un courant $I_{DC}^B$, le premier et le second piège comportant des moyens de génération d'un champ magnétique homogène dont les lignes de champ sont parallèles au plan de mesure et perpendiculaires à la direction du premier et du quatrième fil conducteur ;

des premiers moyens de scission du premier nuage atomique en deux paquets d'atomes, des premiers moyens de déplacement desdits paquets, lesdits moyens permettant également la recombinaison des deux paquets en un seul nuage atomique, l'ensemble des deux paquets ayant parcouru une première aire fermée entre la scission et la recombinaison ;

des seconds moyens de scission du second nuage atomique en deux paquets d'atomes, des seconds moyens de déplacement desdits paquets, lesdits moyens permettant également la recombinaison des deux paquets en un seul nuage atomique, l'ensemble des deux paquets ayant parcouru une seconde aire fermée entre la scission et la recombinaison ;

des moyens de mesure optique du premier et du second déphasage introduits sur le premier et le second nuage atomique après recombinaison ;

des moyens électroniques de contrôle, de commande et d'asservissement des différents moyens du capteur ;

les premiers et seconds moyens de scission et de déplacement comportant essentiellement le premier et le quatrième fil conducteur, un deuxième, un troisième et un cinquième fil conducteur sensiblement parallèles entre eux dans la zone du piège, le deuxième et le troisième fil conducteur disposés symétriquement de part et d'autre du premier fil, le troisième et le cinquième fil conducteur disposés symétriquement de part et d'autre du quatrième fil ; le second fil, le troisième fil et le cinquième fils étant traversés par des courants alternatifs de même amplitude, de même fréquence et de même sens, l'amplitude maximale et la fréquence desdits courants étant suffisantes pour créer au niveau des deux nuages atomiques un champ magnétique alternatif d'intensité supérieure à l'intensité magnétique nécessaire à la scission du nuage atomique en deux paquets atomiques le long de la direction de polarisation dudit champ, les amplitudes des courants continus $I_{DC}^A$ et $I_{DC}^B$ pouvant être modifiées au cours de la mesure, le gyromètre comportant des moyens de mesure optique des premier et second déphasages introduits sur le premier et le second nuages atomiques après recombinaison, les moyens électroniques comprenant des fonctions permettant de faire au moins la somme et la différence du premier et du second déphasages.

Le sens de parcours de la première aire par les paquets d'atomes issus du premier nuage est inverse de celui de la seconde aire par les paquets d'atomes issus du second nuage.

Préférentiellement, les moyens de refroidissement du nuage d'atomes ultrafroids et le piège à atomes sont agencés de façon que le ou les nuages d'atomes soient des condensats de Bose-Einstein.

L'invention porte également sur les procédés de mise en œuvre des capteurs précédents. Ainsi, l'invention concerne également un premier procédé, selon la revendication 4, de mesure d'une vitesse de rotation autour d'un axe donné au moyen d'un gyromètre, de type à ondes de matière, ledit gyromètre comprenant au moins :

une puce électronique comportant un plan de mesure ;
des moyens de génération, de capture et de refroidissement d'un nuage d'atomes ultrafroids et un piège à atomes permettant d'immobiliser le nuage d'atomes ultrafroids à une distance prédéterminée dudit plan de mesure ;
le piège comportant d'une part un premier fil conducteur intégré à ladite puce parcouru par un courant $I_{DC}$ continu et d'autre part des moyens de génération d'un champ magnétique homogène dont les lignes de champ sont, dans la zone du piège, parallèles au plan de mesure et perpendiculaires à la direction du premier fil conducteur ;
des moyens de scission du nuage atomique en deux paquets d'atomes, des moyens de déplacement desdits paquets et de recombinaison des deux paquets en un seul nuage atomique, les moyens de scission et de déplacement comportant essentiellement le premier fil conducteur, un deuxième fil conducteur et un troisième fil conducteur sensiblement parallèles entre eux dans la zone du piège, le deuxième fil conducteur et le troisième fil conducteur disposés symétriquement de part et d'autre du premier fil, le second fil et le troisième fil étant traversés par des courants alternatifs de même amplitude, de même fréquence et de même sens, l'amplitude maximale et la fréquence desdits courants étant suffisantes pour créer au niveau du nuage atomique un champ magnétique alternatif d'intensité supérieure à l'intensité nécessaire à la scission du nuage atomique en deux paquets atomiques le long de la direction de polarisation dudit champ magnétique, l'amplitude du courant continu $I_{DC}$ étant variable ;
des moyens de mesure optique du déphasage introduit sur le nuage atomique après recombinaison ;
des moyens électroniques de contrôle, de commande et d'asservissement des différents moyens du gyromètre ;
la réalisation d'un mesure comportant alors les phases suivantes :

Phase 1 dite de génération : Génération, refroidissement et piégeage d'un nuage d'atomes ultrafroids à une première distance prédéterminée dudit plan de mesure, le courant continu $I_{DC}^A$ ayant une première amplitude $I_{DC}^1$ ;
Phase 2 dite de scission : Augmentation progressive et simultanée des courants alternatifs jusqu'à ce que l'amplitude et la fréquence desdits courants soient suffisantes pour créer au niveau du nuage atomique un champ magnétique d'intensité supérieure à l'intensité magnétique nécessaire à la scission du nuage atomique en deux paquets atomiques le long de l'axe de polarisation dudit champ magnétique, les deux paquets étant séparés d'un écartement déterminé selon ledit axe;
Phase 3 dite de parcours : Variation progressive de l'amplitude du courant continu $I_{DC}^A$ jusqu'à une seconde amplitude $I_{DC}^2$, la première distance des paquets d'atomes variant jusqu'à une seconde distance prédéterminée dudit plan de mesure ;
Phase 4 dite de recombinaison : Baisse de l'amplitude des courants alternatifs de façon à regrouper les deux paquets atomiques en un seul nuage atomique déphasé, l'ensemble des deux paquets ayant parcouru une première aire fermée entre la scission et la recombinaison ;
Phase 5 dite de mesure : Mesure du déphasage par les moyens de mesure optique.

Elle concerne également un second procédé, selon la revendication 5, de mesure de la vitesse de rotation et de l'accélération selon un axe et une direction donnés au moyen d'un capteur, de type à ondes de matière, ledit capteur comprenant au moins :

une puce électronique comportant un plan de mesure ;
des moyens de génération, de capture et de refroidissement d'au moins un premier et un second nuage d'atomes ultrafroids ;
un premier piège à atomes permettant d'immobiliser le premier nuage d'atomes ultrafroids à une première distance prédéterminée dudit plan de mesure, un second piège à atomes permettant d'immobiliser le second nuage d'atomes ultrafroids à une seconde distance prédéterminée dudit plan de mesure ;
le premier piège comportant un premier fil conducteur intégré à ladite puce parcouru par un premier courant $I_{DC}^A$

continu, le second piège comportant un quatrième fil conducteur intégré à ladite puce parcouru par un courant $I_{DC}^B$, le premier et le second piège comportant des moyens de génération d'un champ magnétique homogène dont les lignes de champ sont parallèles au plan de mesure et perpendiculaires à la direction du premier et du quatrième fil conducteur ;

des premiers moyens et des seconds moyens de scission du premier et du second nuage atomique en deux fois deux paquets d'atomes, des premiers et seconds moyens de déplacement desdits paquets, lesdits moyens permettant également la recombinaison des quatre paquets en deux nuages atomiques, l'ensemble des deux fois deux paquets ayant parcouru une première aire fermée entre la scission et la recombinaison et une seconde aire fermée entre la scission et la recombinaison, les premiers et seconds moyens de scission et de déplacement comportant essentiellement le premier et le quatrième fil conducteur, un deuxième, un troisième et un cinquième fil conducteur sensiblement parallèles entre eux dans la zone du piège, le deuxième et le troisième fil conducteur disposés symétriquement de part et d'autre du premier fil, le troisième et le cinquième fil conducteur disposés symétriquement de part et d'autre du quatrième fil ; le second fil, le troisième fil et le cinquième fils étant traversés par des courants alternatifs de même amplitude, de même fréquence et de même sens, l'amplitude maximale et la fréquence desdits courants étant suffisantes pour créer au niveau des deux nuages atomiques un champ magnétique alternatif d'intensité supérieure à l'intensité magnétique nécessaire à la scission des deux nuages atomiques en deux fois deux paquets atomiques dans la direction de polarisation dudit champ magnétique, les amplitudes des courants constants $I_{DC}^A$ et $I_{DC}^B$ pouvant être variées au cours de la mesure, le gyromètre comportant des moyens de mesure optique des premier et second déphasage introduits sur le premier et le second nuage atomique après recombinaison,

des moyens de mesure optique du premier et du second déphasage introduits sur le premier et le second nuage atomique après recombinaison ;

des moyens électroniques de contrôle, de commande et d'asservissement des différents moyens du capteur, comprenant des fonctions permettant de faire au moins la somme et la différence du premier et du second déphasage ;

la réalisation d'une mesure comportant les phases suivantes :

Phase 1 dite de génération : Génération, refroidissement et piégeage d'un premier nuage d'atomes ultrafroids à une première distance prédéterminée dudit plan de mesure, le premier courant continu $I_{DC}^A$ ayant une première amplitude $I_{DC}^1$; génération, refroidissement et piégeage d'un second nuage d'atomes ultrafroids à une seconde distance prédéterminée dudit plan de mesure, le second courant continu $I_{DC}^B$ ayant une première amplitude $I_{DC}^2$;

Phase 2 dite de scission : Augmentation progressive et simultanée des courants alternatifs jusqu'à ce que l'amplitude et la fréquence desdits courants soient suffisants pour créer au niveau des deux nuages atomiques un champ magnétique alternatif d'intensité supérieure à l'intensité magnétique nécessaire à la scission des deux nuages atomiques en deux fois deux paquets atomiques, chaque ensemble de deux paquets étant séparés d'un même écartement déterminé dans une direction parallèle au plan de mesure ;

Phase 3 dite de parcours : Variation progressive de l'amplitude du premier courant continu $I_{DC}^A$ jusqu'à la seconde amplitude $I_{DC}^2$, la première distance des paquets d'atomes issus du premier nuage variant jusqu'à la seconde distance prédéterminée au dit plan de mesure, variation progressive de l'amplitude du second courant continu $I_{DC}^B$ jusqu'à la première amplitude $I_{DC}^1$, la seconde distance des paquets d'atomes issus du second nuage variant jusqu'à la première distance prédéterminée audit plan de mesure ;

Phase 4 dite de recombinaison : Baisse de l'amplitude des courants alternatifs de façon à regrouper les deux fois deux paquets atomiques en deux nuages atomiques déphasés, l'ensemble des paquets ayant parcouru une première aire fermée et une seconde aire fermée entre la scission et la recombinaison ;

Phase 5 dite de mesure : Mesure des deux déphasages obtenus sur le premier nuage et le second nuage par les moyens de mesure optique ; calcul de la somme et la différence du premier et du second déphasage.

L'invention sera mieux comprise et d'autres avantages apparaîtront à la lecture de la description qui va suivre donnée à titre non limitatif et grâce aux figures annexées parmi lesquelles :

La figure 1 représente le principe technique général d'un gyromètre ou d'un accéléromètre à ondes de matière ;
Les figures 2a et 2b représentent un principe possible pour générer un minimum local de champ magnétique à la surface d'une puce ;
La figure 3 représente une vue de dessus du plan de mesure d'une première puce électronique du gyromètre selon l'invention comportant un seul piège à atomes ;
La figure 4 représente une vue en coupe du plan de mesure d'une puce électronique d'un capteur selon l'invention comportant un piège à atomes permettant de réaliser des mesures de vitesse de rotation ;
Les figures 5a à 5e représentent les étapes importantes du procédé de mesure de vitesse de rotation selon l'invention ;
La figure 6 représente une vue en coupe du plan de mesure d'une puce électronique d'un capteur selon l'invention comportant deux pièges à atomes permettant de réaliser des mesures de vitesse de rotation et d'accélération.

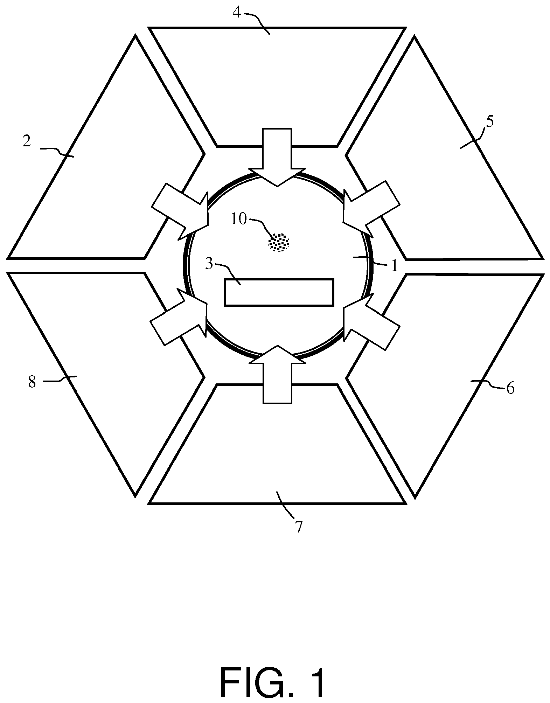

La figure 1 représente les principaux composants techniques d'un gyromètre ou d'un capteur à ondes de matière selon l'invention, la différence essentielle entre le gyromètre et le capteur étant que le gyromètre doit comporter au moins un nuage d'atomes ultrafroids, le capteur devant en comporter au moins deux. Le dispositif comprend une enceinte à vide 1 entretenue par exemple à l'aide d'une pompe ionique et comportant un blindage magnétique, un générateur d'atomes 2, plus connu sous le terme anglo-saxon de « dispenser » atomique. Ce dispenser est, par exemple, un filament chauffant délivrant une vapeur de rubidium. Le dispositif comprend également une puce atomique 3 et éventuellement des sources de champ magnétique extérieurs, un premier ensemble optique 4 permettant la capture et le pré-refroidissement des atomes 10 avant leur entrée dans le piège magnétique 5, ainsi qu'un second ensemble optique de détection 6 à la fin de la séquence qui peut être assuré, par exemple, par une caméra de type CCD. Le dispositif comporte également des moyens de scission 7 du nuage atomique. Un dispositif électronique 8 est également nécessaire pour assurer la commande des différents éléments et la synchronisation temporelle des différentes étapes de la mesure allant de la capture à la détection des atomes. La publication de S. Du et al., Atom-chip Bose-Einstein condensation in a portable vacuum cell, Physical Review A 70, 053606 (2004) est un bon exemple d'intégration de ce type de dispositif dans un volume compact.

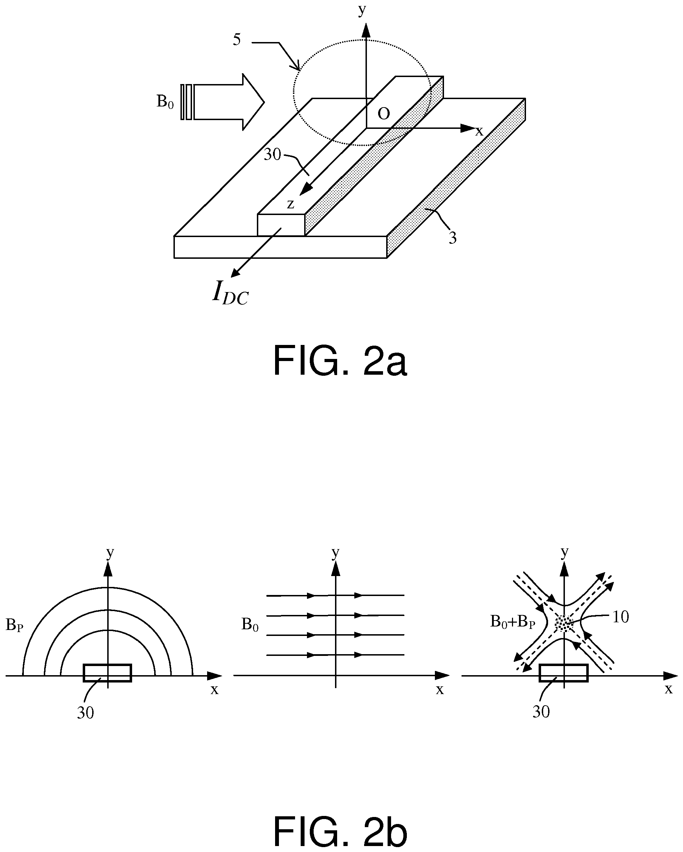

Dans le dispositif selon l'invention, le piégeage des atomes est assuré par des pièges magnétiques 5 dont le principe, connu de l'homme du métier, est schématiquement représenté en figures 2a et 2b. Le nuage d'atomes froids est piégé par un minimum de champ magnétique créé à la surface d'une puce 3 par un ensemble de fils imprimés 30 sur cette dernière, éventuellement combinés à des sources de champ magnétique extérieures. Le piégeage des atomes 10 repose sur l'interaction entre le champ magnétique et le dipôle magnétique total des atomes, qui sont attirés ou repoussés, selon leur état interne, par les extrema de champ. Dans l'exemple des figures 2, le minimum de champ est créé par la combinaison des champs magnétiques $B_P$ générés par les fils conducteurs 30 de la puce 5 et d'un champ magnétique constant ou biais $B_0$ généré par des bobines extérieures non représentées sur les figures 2. La figure 2a représente une vue en perspective d'une partie de la puce 3 et du fil conducteur 30 ainsi que le repère cartésien (0, x, y, z) qui est utilisé pour les figures suivantes. La direction de mesure est parallèle à l'axe Oy. La figure 2b montre, à gauche les lignes de champ magnétiques semi-circulaires créées par un fil conducteur 30 traversé par un courant $I_{DC}$, au centre les lignes de champ rectilignes dues au « biais magnétique » et à droite la superposition des champs magnétiques qui crée au-dessus du fil conducteur 30 le piège magnétique. Les lignes de champ ont alors, dans le plan de coupe (O, x, y) en première approximation, une forme en X majuscule comme indiqué sur la figure 2b, les atomes étant piégés au centre du X. Un tel piège peut éventuellement être anisotrope, par exemple fortement confinant dans deux directions de l'espace et plus faiblement confinant dans la troisième. La description détaillée de l'ensemble des éléments permettant d'obtenir une telle source d'atomes froids à la surface d'une puce est présenté dans la littérature. On peut, par exemple, se reporter à la publication de R. Folman et al., Microscopic atom optics: from wires to an atom chips, Advances in Atomic, Molecular, and Optical Physics 48, pages 263-356 (2002).

On sait, d'après les références précédemment citées, qu'il est possible, à l'aide d'une telle configuration, d'obtenir un ensemble d'atomes froids dans un piège magnétique à une distance $h_0$ de la puce donnée approximativement par :

$$h_0 \approx \frac{\mu_0 I_{DC}}{2\pi B_0}, \qquad\qquad (A)$$

où $\mu_0$ est la perméabilité magnétique du vide. L'ordre de grandeur typique pour la distance $h_0$ est la centaine de micromètres. Celle-ci peut être modifiée et donc les atomes transportés le long de l'axe y en faisant varier les paramètres $I_{DC}$ ou $B_0$.

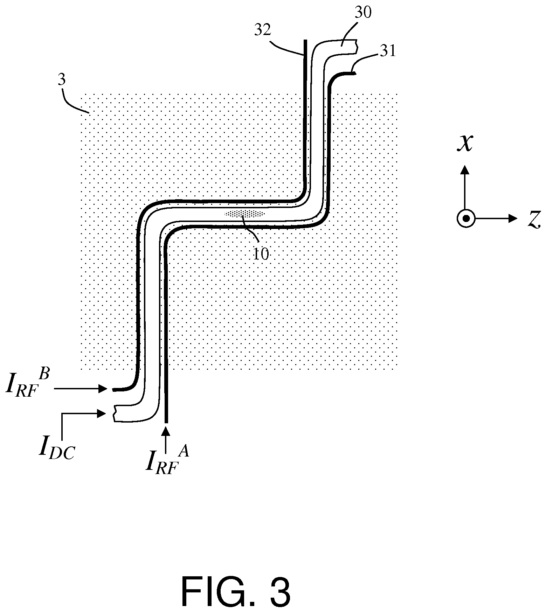

Le dispositif doit également comporter des moyens de scission du nuage atomique. Aussi, dans le dispositif selon l'invention, de part et d'autre du fil principal 30, on dispose deux autres fils 31 et 32 parcourus par des courants alternatifs $I_{RF}^A$ et $I_{RF}^B$, destinés à générer un champ radiofréquence pour la séparation cohérente des atomes. La figure 3 représente une vue de dessus de cette disposition dans laquelle le fil central parcouru par un courant constant est représenté en blanc et les fils latéraux, disposés symétriquement par rapport au fil central et parcourus par des courants alternatifs sont représentés en traits noirs. On sait également que l'application d'un champ radiofréquence permet de modifier le potentiel vu par les atomes, en induisant un couplage entre sous-niveaux magnétiques. On se reportera à la publication de Lesanovsky et al., Adiabatic radio-frequency potentials for the coherent manipulation of matter waves, Physical Review A 73, 033619 (2006) sur ce sujet.

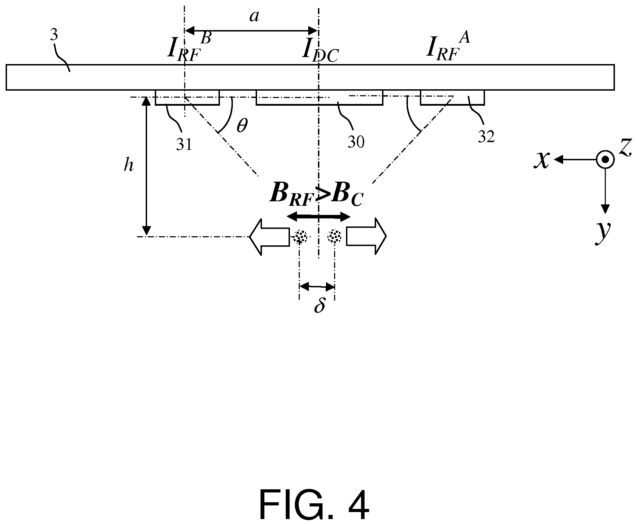

Plus précisément, la figure 4 représente l'application d'un champ radiofréquence $B_{RF}$ polarisé selon l'axe x et généré au niveau du centre du piège atomique, en appliquant par exemple dans les fils radiofréquences 31 et 32 les intensités suivantes :

$$I_{RF}{}^{A} = I_0 \cos(\omega_{RF} t) \quad \text{et} \quad I_{RF}{}^{B} = I_0 \cos(\omega_{RF} t).$$ (B)

En notant a la distance séparant un fil périphérique 31 ou 32 du fil central 30 et $\theta$, l'angle tel que $tg(\theta) = \dfrac{h}{a}$, le champ magnétique radiofréquence vu par les atomes peut alors s'exprimer en fonction des paramètres géométriques $\theta$ et a comme suit :

$$\mathbf{B}_{RF} = B_{RF}{}^{0} \cos(\omega_{RF} t) \sin\theta\, \mathbf{e}_x \quad \text{avec} \quad B_{RF}{}^{0} = \frac{\mu_0 I_0 \cos\theta}{2\pi a}.$$

Dans la publication de Lesanovsky déjà citée, on démontre que lorsque la valeur de $B_{RF}^0 \sin\theta$ est supérieure à une certaine valeur critique $B_C$, ce champ induit une séparation verticale du nuage atomique en deux parties distantes de l'écartement $\delta$ suivant :

$$\delta = \frac{\sqrt{2}}{G} \sqrt{(B_{RF}{}^{0} \sin\theta)^2 - B_C{}^2} \quad \text{avec} \quad G \approx \frac{B_0}{h}.$$ (C)

Le paramètre G est le gradient du champ quadripolaire du piège de Ioffe. Toujours d'après la même référence, le champ radiofréquence critique conduisant à la séparation du nuage atomique en deux parties est donné par :

$$B_C = 2\sqrt{B_{0z} \frac{\kappa B_{0z} - \hbar\omega_{RF}}{|\kappa|}},$$

où $B_{0z}$ est la composante du champ magnétique constant qu'il est nécessaire d'appliquer selon l'axe z pour obtenir un piège confinant dans les trois dimensions et où le facteur k est donné par l'expression $k = g_F \mu_B$, où $\mu_B$ est le magnéton de Bohr et $g_F$ le facteur gyromagnétique noté g-factor du niveau considéré. Naturellement, pour obtenir effectivement une séparation du paquet d'atomes en deux paquets, la profondeur du puits de potentiel selon l'axe y doit être plus grande que la différence d'énergie potentielle induite par gravité.

A l'aide de ces deux outils, piégeage magnétique des atomes et séparation par radiofréquence, il est alors possible de scinder un nuage atomique en deux paquets, de déplacer les paquets dans les deux directions du plan (O, x, y) de façon à leur faire parcourir une aire prédéterminée, puis de les recombiner pour reformer un seul nuage atomique. Cette aire est représentée par un rectangle en pointillés sur les figures 4, 5 et 6. On peut ainsi réaliser toutes les opérations classiques réalisées dans un gyromètre optique, c'est-à-dire séparation, propagation le long d'un chemin optique fermé puis recombinaison des deux ondes contrarotatives. On observe donc de la même façon, si le dispositif est en rotation autour de l'axe Oz, un déphasage entre les deux paquets d'onde par effet Sagnac. On montre que le déphasage $\Delta\varphi_{Sagnac}$ induit par effet Sagnac entre deux paquets d'atomes contrarotatifs en présence d'une rotation à la vitesse angulaire $\theta$ s'écrit alors :

$$\Delta\varphi_{Sagnac} = \frac{4Am}{\hbar} \dot{\theta}$$

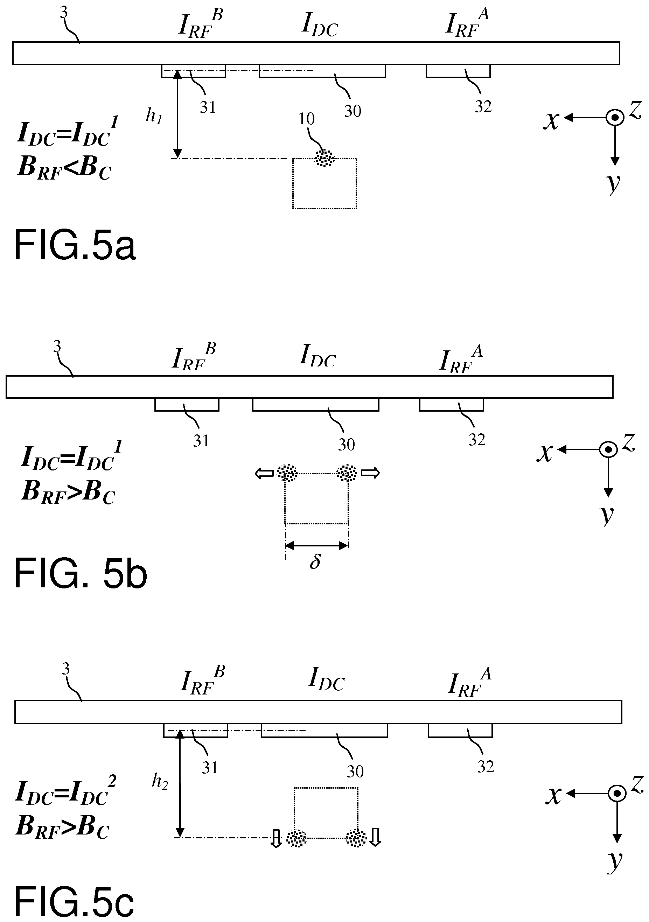

D'une façon plus précise, un premier procédé de mesure selon l'invention comporte cinq étapes principales, illustrées sur les figures 5a à 5e et détaillées ci-dessous, les figures 5a à 5e représentant des vues en coupe dans le plan (O, x, y) de la puce atomique au niveau du piège atomique, sur ces figures, l'aire parcourue par les atomes est représentée en pointillés :

Etape 1 (figure 5a) : Capture et refroidissement des atomes selon les méthodes classiques décrites précédemment, ayant pour résultat l'obtention d'un nuage d'atomes froids, avantageusement un condensat de Bose-Einstein, au centre du piège magnétique, situé à une distance $h_1$, donnée par l'équation (A), au dessus de la puce atomique. La valeur du courant constant circulant dans le fil central 30 est notée $I_{DC}{}^1$ ;

Etape 2 (figure 5b): Application progressive d'un champ radiofréquence selon l'équation (B) par les fils conducteurs 31 et 32 traversés par les courants $I_{RF}^A$ et $I_{RF}^B$, ce qui conduit à la séparation adiabatique du nuage d'atomes d'un écartement δ selon l'axe x, donnée par l'équation (C) ;

Etape 3 (figure 5c) : Augmentation progressive du courant continu circulant dans le fil central, jusqu'à une valeur $I_{DC}^2$, en présence du champ radiofréquence établi précédemment, les atomes se déplacent selon l'axe y jusqu'à une distance $h_2$ de la puce ;

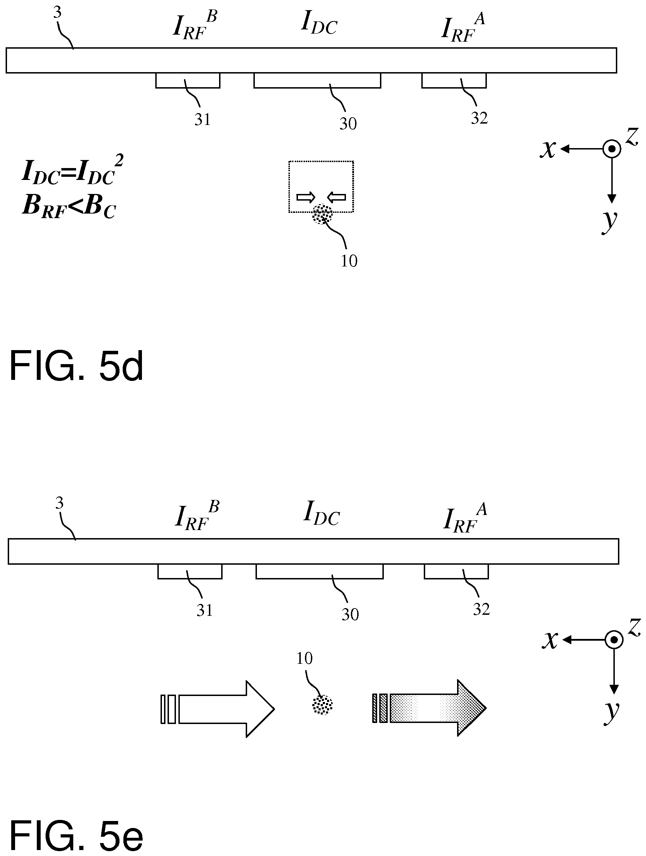

Etape 4 (figure 5d) : Phase de recombinaison, pendant laquelle le champ radiofréquence est progressivement ramené en-dessous de la valeur critique de séparation, tout en maintenant le courant circulant dans le fil central à la valeur constante $I_{DC}^2$, les atomes se recombinent ;

Etape 5 (figure 5e) : Phase de détection pouvant avoir lieu *in situ* ou avantageusement après une phase de temps de vol. Le signal utile est constitué par la phase du réseau de densité atomique formé sur le nuage gazeux, et peut être obtenue, à titre d'exemple, par imagerie par absorption.

La séquence de variation des différents courants dans les différents fils conducteurs est résumée dans le tableau ci-dessous :

|  |  | Phase 1 | Phase 2 | Phase 3 | Phase 4 |
|---|---|---|---|---|---|
| $I_{DC}$ | | $I_{DC}^1$ | $I_{DC}^1$ | $I_{DC}^1 \rightarrow I_{DC}^2$ | $I_{DC}^2$ |
| $I_{RF}^A$ | | 0 | $0 \rightarrow I_0 \cos(\omega_{RF}t)$ | $I_0 \cos(\omega_{RF}t)$ | $I_0 \cos(\omega_{RF}t) \rightarrow 0$ |
| $I_{RF}^B$ | | 0 | $0 \rightarrow I_0 \cos(\omega_{RF}t)$ | $I_0 \cos(\omega_{RF}t)$ | $I_0 \cos(\omega_{RF}t) \rightarrow 0$ |

On montre que le déphasage $\Delta\varphi_{Sagnac}$ induit par effet Sagnac entre deux paquets d'atomes contrarotatifs en présence d'une rotation à la vitesse angulaire $\theta$ s'écrit alors :

$$\Delta\varphi_{Sagnac} = \frac{4Am}{\hbar}\dot{\theta} \approx \frac{m\delta\mu_0(I_{DC}^2 - I_{DC}^1)}{2\pi\hbar B_0}\dot{\theta} \, .$$

C'est ce déphasage, mesuré sur la figure d'interférence atomique lors de l'étape 5 de la séquence décrite précédemment qui fournit une information sur la vitesse de rotation du dispositif.

Cependant, ce gyromètre présente un inconvénient. En raison de la séparation spatiale du paquet d'onde selon l'axe *x,* le dispositif ainsi réalisé va également être sensible au champ de gravitation/accélération selon ce même axe (noté $g_x$). Ce dernier va en effet induire un déphasage additionnel donné par :

$$\Delta\varphi_{gravi} = \frac{mg_x}{\hbar}\delta T \, ,$$

où T est le temps pendant lequel les paquets atomiques sont séparés, c'est-à-dire le temps écoulé entre le début de la phase 2 et la fin de la phase 4. Afin de garantir le bon fonctionnement du dispositif en tant que gyrolaser, il est essentiel de pouvoir faire la différence entre les déphasages $\Delta\varphi_{Sagnac}$ et $\Delta\varphi_{gravi}$.

Pour cela, deux solutions techniques sont possibles. La première consiste à minimiser le temps passé dans les phases 2, 3 et 4 de la séquence décrite ci-dessous, afin de garantir la condition suivante sur toute la gamme d'utilisation du capteur :

$\Delta\varphi_{gravi} \ll \Delta\varphi_{Sagnac}$ soit encore

$$T \ll \frac{2\mu_0(I_{DC}^2 - I_{DC}^1)}{\pi B_0 g_y}\dot{\theta} \, .$$

Naturellement, si cette solution est retenue, le choix de la valeur de T entraîne nécessairement l'existence d'une plage de rotation autour de zéro pour laquelle il ne sera pas possible de distinguer une rotation d'une accélération selon *y*.

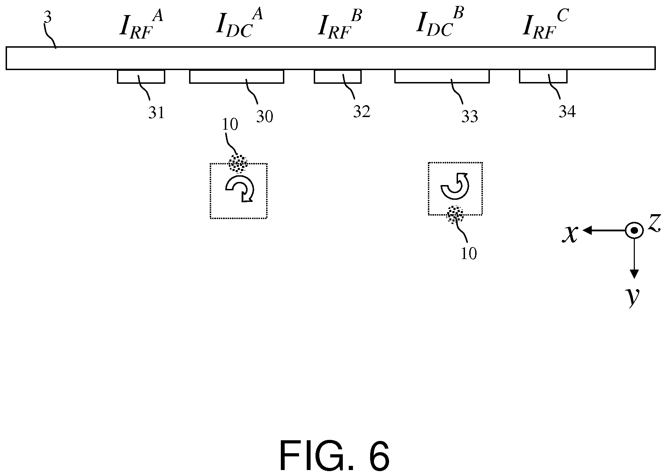

Une deuxième solution, selon l'invention, consiste à réaliser un capteur comportant deux interféromètres de Sagnac comme illustré sur la figure 6, permettant de déterminer à la fois la vitesse de rotation et l'accélération. Chaque interféromètre comporte un piège à atomes et des moyens de scission, de déplacement et de recombinaison constitués de fils conducteurs agencés comme précédemment décrits. Pour des raisons d'efficacité, un des fils conducteurs peut être commun aux deux pièges. Le dispositif comporte alors cinq fils conducteurs, les fils extrêmes 31 et 34 et le fil central 32 étant traversés par des courants alternatifs et assurant les fonctions de scission et de recombinaison, les deux autres fils 30 et 33 assurant les fonctions de piégeage et de déplacement des nuages atomiques. De façon à s'affranchir des effets parasites, les aires parcourues par le premier et le second nuage sont identiques et parcourues en sens opposé. On obtient cet effet en faisant passer dans le même temps le courant circulant dans le fil 30 d'une première valeur $I_{DC}^1$ à une seconde valeur $I_{DC}^2$ et le courant circulant dans le fil 32 d'une première valeur $I_{DC}^2$ à une seconde valeur $I_{DC}^1$, les variations inverses des courants entraînent des variations inverses des parcours et des variations inverses des déphasages dus à la rotation.

Dans cette dernière configuration, le procédé de mesure, selon l'invention, comporte également cinq étapes principales qui sont très voisines de celles détaillées ci-dessus. La séquence de variation des différents courants dans les différents fils conducteurs est alors résumée dans le tableau ci-dessous :

|  | Phase 1 | Phase 2 | Phase 3 | Phase 4 |
|---|---|---|---|---|
| $I_{DC}^A$ | $I_{DC}^1$ | $I_{DC}^1$ | $I_{DC}^1 \rightarrow I_{DC}^2$ | $I_{DC}^2$ |
| $I_{DC}^B$ | $I_{DC}^2$ | $I_{DC}^2$ | $I_{DC}^2 \rightarrow I_{DC}^1$ | $I_{DC}^1$ |
| $I_{RF}^A$ | 0 | $0 \rightarrow I_0\cos(\omega_{RF}t)$ | $I_0\cos(\omega_{RF}t)$ | $I_0\cos(\omega_{RF}t) \rightarrow 0$ |
| $I_{RF}^B$ | 0 | $0 \rightarrow I_0\cos(\omega_{RF}t)$ | $I_0\cos(\omega_{RF}t)$ | $I_0\cos(\omega_{RF}t) \rightarrow 0$ |
| $I_{RF}^C$ | 0 | $0 \rightarrow I_0\cos(\omega_{RF}t)$ | $I_0\cos(\omega_{RF}t)$ | $I_0\cos(\omega_{RF}t) \rightarrow 0$ |

La somme des déphasages obtenus est alors une mesure de l'accélération selon *x,* tandis que la différence entre ces déphasages est une mesure de la rotation autour de l'axe *z*. Un tel montage permet de découpler clairement les deux contributions, tout en assurant les deux fonctions clés d'une centrale inertielle.

En résumé, les principaux avantages du dispositif selon l'invention sont :

- gyromètre à onde de matière intégré sur puce atomique, avec la possibilité de mettre plusieurs capteurs en série sur la même puce afin de rejeter les effets parasites communs ;

- par rapport aux senseurs atomiques existants, l'invention permet d'utiliser des sources atomiques cohérentes (condensats de Bose-Einstein), grâce à l'utilisation de séparatrices RF en lieu et place des faisceaux Raman (gain en rapport signal à bruit) ;

- l'utilisation de puces atomiques permet de plus de gagner en compacité, en intégration et en consommation électrique ;

- le design spécifique présenté dans cette invention peut soit être utilisé en tant que gyromètre uniquement, soit être couplé à un deuxième interféromètre qui assure alors la fonction d'accéléromètre tout en augmentant significativement les performances du gyromètre ;

- la combinaison de plusieurs réalisations de cette invention selon des axes mutuellement orthogonaux permet de réaliser une centrale inertielle atomique intégrée sur puce.

**Revendications**

1. Gyromètre, de type à ondes de matière, permettant la mesure de la vitesse de rotation selon un axe de mesure donné, ledit capteur comprenant au moins :

   une puce électronique (3) comportant une surface plane;

des moyens de génération, de capture et de refroidissement (1, 2, 4) d'un nuage d'atomes ultrafroids (10) et un piège à atomes (5) permettant d'immobiliser le nuage d'atomes ultrafroids à une distance prédéterminée de ladite surface plane ;

le piège (5) comportant d'une part des fils conducteurs intégrés à ladite surface plane et d'autre part des moyens extérieurs de génération de champ magnétique résultant en un minimum local de champ magnétique, le nuage d'atomes froids étant piégé par le minimum local de champ magnétique, les fils conducteurs qui permettent de créer le minimum local de champ magnétique étant orientés dans la zone du piège selon un axe (z) parallèle auxdits fils conducteurs, un axe (y) étant défini perpendiculaire à la surface plane, un axe (x) étant défini perpendiculaire aux axes (y) et (z) et formant avec ces deux axes (y) et (z) un repère cartésien ;

des moyens de scission (7, 31, 32) du nuage atomique (10) en deux paquets d'atomes, des moyens de déplacement (30) desdits paquets, lesdits moyens permettant également la recombinaison des deux paquets en un seul nuage atomique, l'ensemble des deux paquets ayant parcouru une première aire fermée entre la scission et la recombinaison, chaque paquet parcourant, dans cet ordre, un premier segment selon l'axe (x), un second segment selon l'axe (y) et un troisième segment selon l'axe (x) ;

des moyens de mesure optique (6) du déphasage introduit sur le nuage atomique après recombinaison ;

des moyens électroniques (8) de contrôle, de commande et d'asservissement des différents moyens du capteur ;

**caractérisé en ce que** les moyens de scission et de déplacement comportent essentiellement un premier fil conducteur principal (30) traversé par un courant continu $I_{DC}$, un deuxième fil conducteur (31) et un troisième fil conducteur (32) sensiblement parallèles entre eux dans la zone du piège, le deuxième fil conducteur et le troisième fil conducteur disposés symétriquement de part et d'autre du premier fil, le second fil et le troisième fil étant traversés par des courants alternatifs $I_{RF}^A$ et $I_{RF}^B$ de même amplitude $I_0$, de même fréquence $\omega_{RF}$ et de même sens, l'amplitude maximale et la fréquence desdits courants étant suffisantes pour créer au niveau du nuage atomique un champ magnétique alternatif d'intensité supérieure à l'intensité magnétique nécessaire à la scission du nuage atomique en deux paquets atomiques le long de l'axe (x) de polarisation dudit champ, l'amplitude du courant continu $I_{DC}$ circulant dans le premier fil variant de $I_{DC}^1$ à $I_{DC}^2$ en cours de mesure de façon à déplacer les atomes selon l'axe (y), les moyens électroniques (8) étant configurés pour assurer la séquence des quatre phases suivantes de variation des différents courants dans les différents fils conducteurs :

|  | Phase 1 | Phase 2 | Phase 3 | Phase 4 |
|---|---|---|---|---|
| $I_{DC}$ | $I_{DC}^1$ | $I_{DC}^1$ | $I_{DC}^1 \rightarrow I_{DC}^2$ | $I_{DC}^2$ |
| $I_{RF}^A$ | 0 | $0 \rightarrow I_0 \cos(\omega_{RF}t)$ | $I_0 \cos(\omega_{RF}t)$ | $I_0 \cos(\omega_{RF}t) \rightarrow 0$ |
| $I_{RF}^B$ | 0 | $0 \rightarrow I_0 \cos(\omega_{RF}t)$ | $I_0 \cos(\omega_{RF}t)$ | $I_0 \cos(\omega_{RF}t) \rightarrow 0$ |

2. Capteur de type à ondes de matière-de mesure de la vitesse de rotation et de l'accélération selon un axe et une direction donnés, ledit capteur comprenant au moins :

une puce électronique (3) comportant une surface plane;

des moyens de génération, de capture et de refroidissement (1, 2, 4) d'un premier nuage d'atomes ultrafroids (10) et un premier piège à atomes (5) permettant d'immobiliser le premier nuage d'atomes ultrafroids à une première distance prédéterminée de ladite surface plane ;

le premier piège (5) comportant d'une part des fils conducteurs intégrés à ladite surface plane et d'autre part des moyens extérieurs de génération de champ magnétique résultant en un minimum local de champ magnétique, le premier nuage d'atomes froids étant piégé par le minimum local de champ magnétique, les fils conducteurs qui permettent de créer le minimum local de champ magnétique étant orientés, dans la zone du premier piège, selon un axe (z) parallèle auxdits fils conducteurs, un axe (y) étant défini perpendiculaire à la surface plane, un axe (x) étant défini perpendiculaire aux axes (y) et (z) et formant avec ces deux axes (y) et (z) un repère cartésien ;

des premiers moyens de scission (7, 31, 32) du premier nuage atomique (10) en deux paquets d'atomes, des moyens de déplacement (30) desdits paquets, lesdits premiers moyens permettant également la recombinaison des deux paquets en un seul premier nuage atomique, l'ensemble des deux paquets ayant parcouru une première aire fermée entre la scission et la recombinaison, chaque paquet parcourant, dans cet ordre, un premier segment selon l'axe (x), un second segment selon l'axe (y) et un troisième segment selon l'axe (x) ;

des moyens de génération, de capture et de refroidissement (1, 2, 4) d'au moins un second nuage (10) d'atomes ultrafroids ;

un second piège à atomes (5) permettant d'immobiliser le second nuage d'atomes ultrafroids à une seconde distance prédéterminée de ladite surface plane;

le second piège (5) comportant d'une part des fils conducteurs intégrés à ladite surface plane et d'autre part des moyens extérieurs de génération de champ magnétique résultant en un minimum local de champ magnétique, le second nuage d'atomes froids étant piégé par le minimum local de champ magnétique, les fils conducteurs qui permettent de créer le minimum local de champ magnétique étant orientés, dans la zone du second piège, selon l'axe (z) ;

le premier piège comportant un premier fil conducteur (30) intégré à ladite puce parcouru par un premier courant $I_{DC}{}^A$ continu,

le second piège comportant un quatrième fil conducteur (33) intégré à ladite puce parcouru par un courant $I_{DC}{}^B$ continu,

le premier et le second piège comportant, en guise desdits moyens extérieurs de génération de champ magnétique, des moyens de génération d'un champ magnétique homogène dont les lignes de champ sont parallèles à ladite surface plane et perpendiculaires à la direction du premier et du quatrième fil conducteur ;

des seconds moyens de scission (32, 34) du second nuage atomique en deux paquets d'atomes, des seconds moyens de déplacement desdits paquets (33), lesdits moyens permettant également la recombinaison des deux paquets en un seul second nuage atomique, l'ensemble des deux paquets ayant parcouru une seconde aire fermée entre la scission et la recombinaison, ladite seconde aire étant identique à la première aire fermée ;

des moyens de mesure optique (6) du premier et du second déphasage introduits sur le premier et le second nuage atomique après recombinaison ;

des moyens électroniques (8) de contrôle, de commande et d'asservissement des différents moyens du capteur ;

**caractérisé en ce que** les premiers et seconds moyens de scission et de déplacement comportent essentiellement le premier et le quatrième fil conducteur, un deuxième, un troisième et un cinquième fil conducteur (30, 31, 32, 33, 34) sensiblement parallèles entre eux dans la zone des deux pièges, le deuxième et le troisième fil conducteur (31, 32) disposés symétriquement de part et d'autre du premier fil (30), le troisième et le cinquième fil conducteur disposés symétriquement (32, 34) de part et d'autre du quatrième fil (33) ; le second fil, le troisième fil et le cinquième fils étant traversés par des courants alternatifs $I_{RF}{}^A$, $I_{RF}{}^B$ et $I_{RF}{}^C$ de même amplitude $I_0$, de même fréquence $\omega_{RF}$ et de même sens, l'amplitude maximale et la fréquence desdits courants étant suffisantes pour créer au niveau des deux nuages atomiques un champ magnétique alternatif d'intensité supérieure à l'intensité magnétique nécessaire à la scission du nuage atomique en deux paquets atomiques dans la direction dudit champ magnétique, l'amplitude du courant continu $I_{DC}{}^A$ variant de $I_{DC}{}^1$ à $I_{DC}{}^2$ et l'amplitude du courant continu $I_{DC}{}^B$ variant de $I_{DC}{}^2$ à $I_{DC}{}^1$ au cours de la mesure de façon à déplacer les atomes selon l'axe (y) en sens opposé, le capteur comportant des moyens de mesure optique des premier et second déphasage introduits sur le premier et le second nuages atomiques après recombinaison, les moyens électroniques comprenant des fonctions permettant de faire au moins la somme et la différence du premier et du second déphasages, le sens de parcours de la première aire par les paquets d'atomes issus du premier nuage étant inverse de celui de la seconde aire par les paquets d'atomes issus du second nuage, les moyens électroniques (8) étant configurés pour assurer la séquence des quatre phases suivantes de variation des différents courants dans les différents fils conducteurs :

| | Phase 1 | Phase 2 | Phase 3 | Phase 4 |
|---|---|---|---|---|
| $I_{DC}{}^A$ | $I_{DC}{}^1$ | $I_{DC}{}^1$ | $I_{DC}{}^1 \rightarrow I_{DC}{}^2$ | $I_{DC}{}^2$ |
| $I_{DC}{}^B$ | $I_{DC}{}^2$ | $I_{DC}{}^2$ | $I_{DC}{}^2 \rightarrow I_{DC}{}^1$ | $I_{DC}{}^1$ |
| $I_{RF}{}^A$ | 0 | $0 \rightarrow I_0\cos(\omega_{RF}t)$ | $I_0\cos(\omega_{RF}t)$ | $I_0\cos(\omega_{RF}t) \rightarrow 0$ |
| $I_{RF}{}^B$ | 0 | $0 \rightarrow I_0\cos(\omega_{RF}t)$ | $I_0\cos(\omega_{RF}t)$ | $I_0\cos(\omega_{RF}t) \rightarrow 0$ |
| $I_{RF}{}^C$ | 0 | $0 \rightarrow I_0\cos(\omega_{RF}t)$ | $I_0\cos(\omega_{RF}t)$ | $I_0\cos(\omega_{RF}t) \rightarrow 0$ |

3. Capteur selon l'une des revendications précédentes, **caractérisé en ce que** les moyens de refroidissement du nuage d'atomes ultrafroids et le piège à atomes sont agencés de façon que le ou les nuages d'atomes soient des condensats de Bose-Einstein.

4. Procédé de mesure d'une vitesse de rotation autour d'un axe donné au moyen d'un gyromètre, de type à ondes de matière, ledit gyromètre comprenant au moins :

une puce électronique (3) comportant une surface plane;

des moyens de génération, de capture et de refroidissement (1, 2, 4) d'un nuage d'atomes ultrafroids (10) et un piège à atomes (5) permettant d'immobiliser le nuage d'atomes ultrafroids à une distance prédéterminée de ladite surface plane ;

le piège comportant d'une part des fils conducteurs intégrés à ladite surface plane et d'autre part des moyens extérieurs de génération de champ magnétique résultant en un minimum local de champ magnétique, le nuage d'atomes froids étant piégé par le minimum local de champ magnétique, les fils conducteurs qui permettent de créer le minimum local de champ magnétique étant orientés, dans la zone du piège, selon un axe (z) parallèle audit fil conducteur, un axe (y) étant défini perpendiculaire à la surface plane, un axe (x) étant défini perpendiculaire aux axes (y) et (z) et formant avec ces deux axes (y) et (z) un repère cartésien ;

des moyens de scission (31, 32) du nuage atomique en deux paquets d'atomes, des moyens de déplacement (30) desdits paquets et de recombinaison des deux paquets en un seul nuage atomique, les moyens de scission et de déplacement comportant essentiellement un premier fil conducteur (30), un deuxième fil conducteur (31) et un troisième fil conducteur (32) sensiblement parallèles entre eux dans la zone du piège, le deuxième fil conducteur et le troisième fil conducteur disposés symétriquement de part et d'autre du premier fil, le second fil et le troisième fil étant traversés par des courants alternatifs $I_{RF}^A$ et $I_{RF}^B$ de même amplitude $I_0$, de même fréquence $\omega_{RF}$ et de même sens;

des moyens de mesure optique (6) du déphasage introduit sur le nuage atomique après recombinaison ;

des moyens électroniques (8) de contrôle, de commande et d'asservissement des différents moyens du gyromètre ;

**caractérisé en ce que** la réalisation d'une mesure comporte les phases suivantes :

Phase 1 dite de génération : Génération, refroidissement et piégeage d'un nuage d'atomes ultrafroids (10) à une première distance prédéterminée ($h_1$) de ladite surface plane selon l'axe (y), le courant continu $I_{DC}^A$ ayant une première amplitude $I_{DC}^1$;

Phase 2 dite de scission : Augmentation progressive et simultanée des courants alternatifs $I_{RF}^A$ et $I_{RF}^B$ jusqu'à ce que l'amplitude et la fréquence desdits courants soient suffisants pour créer au niveau du nuage atomique un champ magnétique d'intensité supérieure à l'intensité magnétique nécessaire à la scission du nuage atomique en deux paquets atomiques, les deux paquets étant séparés d'un écartement déterminé ($\delta$) dans la direction (x) ;

Phase 3 dite de parcours : Variation progressive de l'amplitude du courant continu $I_{DC}^A$ jusqu'à une seconde amplitude $I_{DC}^2$, la première distance des paquets d'atomes variant jusqu'à une seconde distance prédéterminée ($h_2$) de ladite surface plane selon l'axe (y) ;

Phase 4 dite de recombinaison : Baisse de l'amplitude des courants alternatifs $I_{RF}^A$ et $I_{RF}^B$ de façon à regrouper les deux paquets atomiques en un seul nuage atomique déphasé, l'ensemble des deux paquets ayant parcouru une première aire fermée entre la scission et la recombinaison ;

Phase 5 dite de mesure : Mesure du déphasage par les moyens de mesure optique.

5. Procédé de mesure de la vitesse de rotation et de l'accélération selon un axe et une direction donnés au moyen d'un capteur, de type à ondes de matière, ledit capteur comprenant au moins :

une puce électronique (3) comportant une surface plane;

des moyens de génération, de capture et de refroidissement (1, 2, 4) d'un premier nuage d'atomes ultrafroids (10) et un premier piège à atomes (5) permettant d'immobiliser le premier nuage d'atomes ultrafroids à une première distance prédéterminée de ladite surface plane ;

le premier piège comportant au moins d'une part des fils conducteurs intégrés à ladite surface plane et d'autre part des moyens extérieurs de génération de champ magnétique résultant en un minimum local de champ magnétique, le nuage d'atomes froids étant piégé par le minimum local de champ magnétique, les fils conducteurs qui permettent de créer le minimum local de champ magnétique étant orientés, dans la zone du piège, selon un axe (z) parallèle auxdits fils conducteurs, un axe (y) étant défini perpendiculaire à la surface plane, un axe (x) étant défini perpendiculaire aux axes (y) et (z) et formant avec ces deux axes (y) et (z) un repère cartésien ;

des premiers moyens de scission (31, 32) du premier nuage atomique en deux paquets d'atomes, des premiers moyens de déplacement (30) desdits paquets et de recombinaison des deux paquets en un seul premier nuage atomique, l'ensemble des deux paquets ayant parcouru une première aire fermée entre la scission et la recombinaison, chaque paquet parcourant, dans cet ordre, un premier segment selon l'axe (x), un second segment selon l'axe (y) et un troisième segment selon l'axe (x);

des moyens de génération, de capture et de refroidissement (1, 2, 4) d'au moins un second nuage d'atomes ultrafroids ;

un second piège à atomes permettant d'immobiliser le second nuage d'atomes ultrafroids à une seconde distance prédéterminée ($h_2$) de ladite surface plane selon l'axe (y) ;

le second piège (5) comportant d'une part des fils conducteurs intégrés à ladite surface plane et d'autre part des moyens extérieurs de génération de champ magnétique résultant en un minimum local de champ magnétique, le second nuage d'atomes froids étant piégé par le minimum local de champ magnétique, les fils conducteurs qui permettent de créer le minimum local de champ magnétique étant orientés, dans la zone du second piège, selon l'axe (z);

le premier piège comportant un premier fil conducteur intégré à ladite puce parcouru par un premier courant $I_{DC}^A$ continu,

le second piège comportant un quatrième fil conducteur (33) intégré à ladite puce parcouru par un courant $I_{DC}^B$,

le premier et le second piège comportant, en guise desdits moyens extérieurs de génération de champ magnétique, des moyens de génération d'un champ magnétique homogène dont les lignes de champ sont parallèles à ladite surface plane et perpendiculaires à la direction du premier et du quatrième fil conducteur;

des seconds moyens de scission du second nuage atomique en deux paquets d'atomes, des seconds moyens de déplacement desdits paquets, lesdits moyens permettant également la recombinaison des deux paquets en un seul second nuage atomique, l'ensemble des deux paquets ayant parcouru une seconde aire fermée entre la scission et la recombinaison, ladite seconde aire étant identique à la première aire fermée, les premiers et seconds moyens de scission et de déplacement comportant essentiellement le premier et le quatrième fil conducteur (30, 33), un deuxième, un troisième et un cinquième fil conducteur (31, 32, 34) sensiblement parallèles entre eux dans la zone du piège, le deuxième et le troisième fil conducteur disposés symétriquement de part et d'autre du premier fil, le troisième et le cinquième fil conducteur disposés symétriquement de part et d'autre du quatrième fil ; le second fil, le troisième fil et le cinquième fils étant traversés par des courants alternatifs $I_{RF}^A$, $I_{RF}^B$ et $I_{RF}^C$ de même amplitude $I_0$, de même fréquence $\omega_{RF}$ et de même sens;

des moyens de mesure optique (6) du premier et du second déphasages introduits sur le premier et le second nuages atomiques après recombinaison ;

des moyens électroniques (8) de contrôle, de commande et d'asservissement des différents moyens du capteur, comprenant des fonctions permettant de faire au moins la somme et la différence du premier et du second déphasage ;

**caractérisé en ce que** la réalisation d'une mesure comporte les phases suivantes :

Phase 1 dite de génération :

Génération, refroidissement et piégeage d'un premier nuage d'atomes ultrafroids (10) à une première distance prédéterminée ($h_1$) de ladite surface plane selon l'axe (y), le courant continu $I_{DC}^A$ ayant une première amplitude $I_{DC}^1$;

Génération, refroidissement et piégeage d'un second nuage d'atomes ultrafroids à une seconde distance prédéterminée ($h_2$) au-dessus de ladite surface plane selon l'axe (y), le second courant continu $I_{DC}^B$ ayant une première amplitude $I_{DC}^2$;

Phase 2 dite de scission : Augmentation progressive et simultanée des courants alternatifs $I_{RF}^A$, $I_{RF}^B$ et $I_{RF}^C$ jusqu'à ce que l'amplitude et la fréquence desdits courants soient suffisantes pour créer au niveau des deux nuages atomiques un champ magnétique d'intensité supérieure à l'intensité magnétique nécessaire à la scission des deux nuages atomiques en deux fois deux paquets atomiques, chaque ensemble de deux paquets étant séparés d'un même écartement déterminé dans la direction (x) ;

Phase 3 dite de parcours : Variation progressive de l'amplitude du premier courant continu $I_{DC}^A$ jusqu'à la seconde amplitude $I_{DC}^2$, la première distance des paquets d'atomes issus du premier nuage variant jusqu'à la seconde distance prédéterminée à ladite surface plane et variation progressive de l'amplitude du second courant continu $I_{DC}^B$ jusqu'à la première amplitude $I_{DC}^1$, la seconde distance des paquets d'atomes issus du second nuage variant jusqu'à la première distance prédéterminée de ladite surface plane ;

Phase 4 dite de recombinaison : Baisse de l'amplitude des courants alternatifs $I_{RF}^A$, $I_{RF}^B$ et $I_{RF}^C$ de façon à regrouper les deux fois deux paquets atomiques en deux nuages atomiques déphasés, l'ensemble des paquets ayant parcouru une première aire fermée et une seconde aire fermée entre la scission et la recombinaison, le sens de parcours de la première aire par les paquets d'atomes issus du premier nuage étant inverse de celui de la seconde aire par les paquets d'atomes issus du second nuage ;

Phase 5 dite de mesure : Mesure des deux déphasages obtenus sur le premier nuage et le second nuage par les moyens de mesure optique ; calcul de la somme et la différence du premier et du second déphasage.

**Patentansprüche**

1.  Gyrometer des Materiewellentyps, mit dem die Rotationsgeschwindigkeit gemäß einer gegebenen Messachse gemessen werden kann, wobei der Sensor wenigstens Folgendes umfasst:

    einen Mikrochip (3) mit einer Oberflächenebene;
    Mittel zum Erzeugen, Erfassen und Kühlen (1, 2, 4) einer Wolke aus ultrakalten Atomen (10) und eine Atomfalle (5), die es zulässt, die Wolke mit ultrakalten Atomen in einem vorbestimmten Abstand von der Oberflächenebene zu immobilisieren;
    wobei die Falle (5) einerseits auf der ebenen Oberfläche integrierte Leitungsdrähte und andererseits externe Mittel zum Erzeugen eines Magnetfelds umfasst, das ein minimales lokales Magnetfeld ergibt, wobei die Wolke mit kalten Atomen von dem minimalen lokalen Magnetfeld eingefangen wird, wobei die Leitungsdrähte, die die Erzeugung des minimalen lokalen Magnetfelds zulassen, in der Zone der Falle gemäß einer Achse (z) parallel zu den Leistungsdrähten orientiert sind, wobei eine Achse (y) lotrecht zu der ebenen Fläche definiert wird, wobei eine Achse (x) lotrecht zu den Achsen (y) und (z) definiert wird und mit diesen beiden Achsen (y) und (z) einen kartesischen Bezugspunkt bildet;
    Mittel (7, 31, 32) zum Spalten der Atomwolke (10) in zwei Atompakete, Mittel (30) zum Verschieben der Pakete, wobei die Mittel auch eine Neukombination der zwei Pakete zu einer einzigen Atomwolke zulassen, wobei die Pakete zusammen einen ersten geschlossenen Bereich zwischen der Spaltung und der Neukombination durchlaufen haben, wobei jedes Paket, in dieser Reihenfolge, ein erstes Segment gemäß der Achse (x), ein zweites Segment gemäß der Achse (y) und ein drittes Segment gemäß der Achse (x) durchlaufen;
    Mittel (6) zum optischen Messen der nach der Neukombination in die Atomwolke eingeführten Phasenverschiebung;
    elektronische Mittel (8) zum Kontrollieren, Steuern und Regeln der unterschiedlichen Mittel des Sensors;
    **dadurch gekennzeichnet, dass** die Mittel zum Spalten und Verschieben im Wesentlichen einen ersten Hauptleitungsdraht (30), der von einem Gleichstrom $I_{DC}$ durchflossen wird, einen zweiten Leistungsdraht (31) und einen dritten Leistungsdraht (32) im Wesentlichen parallel zueinander in der Zone der Falle umfassen, wobei der zweite Leitungsdraht und der dritte Leitungsdraht symmetrisch auf beiden Seiten des ersten Drahts angeordnet sind, wobei der zweite Draht und der dritte Draht von Wechselströmen $I_{RF}{}^{A}$ und $I_{RF}{}^{B}$ mit derselben Amplitude $I_0$, derselben Frequenz $\omega_{RF}$ und derselben Richtung durchflossen werden, wobei die maximale Amplitude und die Frequenz der Ströme ausreichen, um in der Zone der Atomwolke ein magnetisches Wechselfeld mit einer höheren Intensität als der Magnetintensität zu erzeugen, die zum Spalten der Atomwolke in zwei Atompakete entlang der Polarisationsachse (x) des Feldes zu erzeugen, wobei die Amplitude des im ersten Leitungsdraht fließenden Gleichstroms $I_{DC}$ zwischen $I_{DC}{}^{1}$ und $I_{DC}{}^{2}$ im Laufe der Messung variiert, um die Atome entlang der Achse (y) zu verschieben,
    wobei die elektronischen Mittel (8) zum Gewährleisten der Sequence von vier folgenden Variationsphasen der verschiedenen Ströme in den unterschiedlichen Leistungsdrähten konfiguriert sind:

|  | Phase 1 | Phase 2 | Phase 3 | Phase 4 |
|---|---|---|---|---|
| $I_{DC}$ | $I_{DC}{}^{1}$ | $I_{DC}{}^{1}$ | $I_{DC}{}^{1} \rightarrow I_{DC}{}^{2}$ | $I_{DC}{}^{2}$ |
| $I_{RF}{}^{A}$ | 0 | $0 \rightarrow I_0 \cos(\omega_{RF}t)$ | $I_0 \cos(\omega_{RF}t)$ | $I_0 \cos(\omega_{RF}t) \rightarrow 0$ |
| $I_{RF}{}^{B}$ | 0 | $0 \rightarrow I_0 \cos(\omega_{RF}t)$ | $I_0 \cos(\omega_{RF}t)$ | $I_0 \cos(\omega_{RF}t) \rightarrow 0$ |

2.  Sensor des Materiewellentyps zum Messen der Rotationsgeschwindigkeit und der Beschleunigung gemäß einer gegebenen Achse und Richtung, wobei der Sensor wenigstens Folgendes umfasst:

    einen Mikrochip (3) mit einer Oberflächenebene;
    Mittel zum Erzeugen, Erfassen und Kühlen (1, 2, 4) einer ersten Wolke aus ultrakalten Atomen (10) und eine erste Atomfalle (5), die es zulässt, die Wolke mit ultrakalten Atomen in einem vorbestimmten Abstand von der Oberflächenebene zu immobilisieren;
    wobei die erste Falle (5) einerseits auf der ebenen Oberfläche integrierte Leitungsdrähte und andererseits externe Mittel zum Erzeugen eines Magnetfelds umfasst, das ein minimales lokales Magnetfeld ergibt, wobei die erste Wolke mit kalten Atomen von dem minimalen lokalen Magnetfeld eingefangen wird, wobei die Leitungsdrähte, die die Erzeugung des minimalen lokalen Magnetfelds zulassen, in der Zone der ersten Falle gemäß einer Achse (z) parallel zu den Leistungsdrähten orientiert sind, wobei eine Achse (y) lotrecht zu der ebenen Fläche definiert wird, wobei eine Achse (x) lotrecht zu den Achsen (y) und (z) definiert wird und mit diesen beiden Achsen (y) und (z) einen kartesischen Bezugspunkt bildet;

erste Mittel (7, 31, 32) zum Spalten der ersten Atomwolke (10) in zwei Atompakete, Mittel (30) zum Verschieben der Pakete, wobei die ersten Mittel auch eine Neukombination der zwei Pakete zu einer einzigen Atomwolke zulassen, wobei die Pakete zusammen einen ersten geschlossenen Bereich zwischen der Spaltung und der Neukombination durchlaufen haben, wobei jedes Paket, in dieser Reihenfolge, ein erstes Segment gemäß der Achse (x), ein zweites Segment gemäß der Achse (y) und ein drittes Segment gemäß der Achse (x) durchlaufen;

Mittel zum Erzeugen, Erfassen und Kühlen (1, 2, 4) wenigstens einer zweiten Wolke aus ultrakalten Atomen (10);

eine zweite Atomfalle (5), die es zulässt, die zweite Wolke mit ultrakalten Atomen in einem zweiten vorbestimmten Abstand von der Oberflächenebene zu immobilisieren;

wobei die zweite Falle (5) einerseits auf der ebenen Oberfläche integrierte Leitungsdrähte und andererseits externe Mittel zum Erzeugen eines Magnetfelds umfasst, das ein minimales lokales Magnetfeld ergibt, wobei die zweite Wolke mit kalten Atomen von dem minimalen lokalen Magnetfeld eingefangen wird, wobei die Leitungsdrähte, die die Schaffung des minimalen lokalen Magnetfelds zulassen, in der Zone der zweiten Falle gemäß der Achse (z) orientiert sind;

wobei die erste Falle einen ersten Leitungsdraht (30) umfasst, der in den von einem ersten Gleichstrom $I_{DC}^A$ durchflossenen Chip integriert ist;

wobei die zweite Falle einen vierten Leitungsdraht (33) umfasst, der in den von einem Gleichstrom $I_{DC}^B$ durchflossenen Chip integriert ist;

wobei die erste Falle und die zweite Falle, als die externen Magnetfelderzeugungsmittel, Mittel zum Erzeugen eines homogenen Magnetfelds umfassen, dessen Feldlinien parallel zu der ebenen Fläche und lotrecht zur Richtung des ersten und des vierten Leitungsdrahts sind;

zweite Mittel (32, 34) zum Spalten der zweiten Atomwolke in zwei Atompakete, zweite Mittel (33) zum Verschieben der Pakete, wobei die Mittel auch eine Neukombination der zwei Pakete zu einer einzigen Atomwolke zulassen, wobei die Pakete zusammen einen zweiten geschlossenen Bereich zwischen der Spaltung und der Neukombination durchlaufen haben, wobei der zweite Bereich mit dem ersten geschlossenen Bereich identisch ist;

Mittel (6) zum optischen Messen der nach der Neukombination in die erste und die zweite Atomwolke eingeführten ersten und zweiten Phasenverschiebung;

elektronische Mittel (8) zum Kontrollieren, Steuern und Regeln der unterschiedlichen Mittel des Sensors;

**dadurch gekennzeichnet, dass** das erste und das zweite Mittel zum Spalten und Verschieben im Wesentlichen den ersten und den vierten Leitungsdraht, einen zweiten, einen dritten und einen fünften Leistungsdraht (30, 31, 32, 33, 34) im Wesentlichen parallel zueinander in der Zone der zwei Fallen umfassen, wobei der zweite und der dritte Leitungsdraht (31, 32) symmetrisch auf beiden Seiten des ersten Drahts (30) angeordnet sind, wobei der dritte und der fünfte Leistungsdraht symmetrisch (32, 34) auf beiden Seiten des vierten Drahts (33) angeordnet sind; wobei der zweite Draht, der dritte Draht und der fünfte Draht von Wechselströmen $I_{RF}^A$, $I_{RF}^B$ und $I_{RF}^C$ mit derselben Amplitude $I_0$, derselben Frequenz $\omega_{RF}$ und derselben Richtung durchflossen werden, wobei die maximale Amplitude und die Frequenz der Ströme ausreichen, um in der Zone der beiden Atomwolken ein magnetisches Wechselfeld mit einer höheren Intensität als der Magnetintensität zu erzeugen, die zum Spalten der Atomwolke in zwei Atompakete in der Richtung des Magnetfeldes zu erzeugen, wobei die Amplitude des Gleichstroms $I_{DC}^A$ zwischen $I_{DC}^1$ und $I_{DC}^2$ und die Amplitude des Gleichstroms $I_{DC}^B$ zwischen $I_{DC}^2$ und $I_{DC}^1$ im Laufe der Messung variiert, um die Atome entlang der Achse (y) im entgegengesetzten Sinn zu verschieben, wobei der Sensor Mittel zum optischen Messen der nach der Neukombination in die erste und die zweite Atomwolke eingeführte erste und zweite Phasenverschiebung umfasst, wobei die elektronischen Mittel Funktionen umfassen, die es zulassen, wenigstens die Summe und die Differenz der ersten und zweiten Phasenverschiebung zu bilden, wobei die Durchlaufrichtung der von der ersten Wolke stammenden Atompakete durch den ersten Bereich umgekehrt zu der von der zweiten Wolke stammenden Atompakete durch den zweiten Bereich ist,

wobei die elektronischen Mittel (8) zum Gewährleisten der Sequence von vier folgenden Variationsphasen der verschiedenen Ströme in den unterschiedlichen Leistungsdrähten konfiguriert sind:

|  | Phase 1 | Phase 2 | Phase 3 | Phase 4 |
|---|---|---|---|---|
| $I_{DC}^A$ | $I_{DC}^1$ | $I_{DC}^1$ | $I_{DC}^1 \rightarrow I_{DC}^2$ | $I_{DC}^2$ |
| $I_{DC}^B$ | $I_{DC}^2$ | $I_{DC}^2$ | $I_{DC}^2 \rightarrow I_{DC}^1$ | $I_{DC}^1$ |

(fortgesetzt)

|  | Phase 1 | Phase 2 | Phase 3 | Phase 4 |
|---|---|---|---|---|
| $I_{RF}{}^{:A}$ | 0 | $0 \rightarrow I_0 \cos(\omega_{RF}t)$ | $I_0 \cos(\omega_{RF}t)$ | $I_0 \cos(\omega_{RF}t) \rightarrow 0$ |
| $I_{RF}{}^{B}$ | 0 | $0 \rightarrow I_0 \cos(\omega_{RF}t)$ | $I_0 \cos(\omega_{RF}t)$ | $I_0 \cos(\omega_{RF}t) \rightarrow 0$ |
| $I_{RF}{}^{C}$ | 0 | $0 \rightarrow I_0 \cos(\omega_{RF}t)$ | $I_0 \cos(\omega_{RF}t)$ | $I_0 \cos(\omega_{RF}t) \rightarrow 0$ |

3. Sensor nach einem der vorherigen Ansprüche, **dadurch gekennzeichnet, dass** die Mittel zum Kühlen der ultrakalten Atomwolke und die Atomfalle so angeordnet sind, dass die ein oder mehreren Atomwolken Bose-Einstein-Kondensate sind.

4. Verfahren zum Messen einer Rotationsgeschwindigkeit um eine gegebene Achse mittels wenigstens eines Gyrometers, des Materiewellentyps, wobei das Gyrometer wenigstens Folgendes umfasst:

einen Mikrochip (3) mit einer ebenen Oberfläche;
Mittel zum Erzeugen, Erfassen und Kühlen (1, 2, 4) einer ultrakalten Atomwolke (10) und eine Atomfalle (5), mit der die ultrakalte Atomwolke in einem vorbestimmten Abstand von der ebenen Fläche immobilisiert werden kann;
wobei die Falle einerseits auf der ebenen Oberfläche integrierte Leistungsdrähte und andererseits externe Mittel zum Erzeugen eines Magnetfelds umfasst, das ein minimales lokales Magnetfeld ergibt, wobei die kalte Atomwolke von dem minimalen lokalen Magnetfeld eingefangen wird, wobei die Leitungsdrähte, die es zulassen, das minimale lokale Magnetfeld zu schaffen, in der Zone der Falle entlang einer Achse (z) parallel zu dem Leistungsdraht orientiert sind, wobei eine Achse (y) lotrecht zu der ebenen Fläche definiert wird, wobei eine Achse (x) lotrecht zu den Achsen (y) und (z) definiert wird und mit diesen zwei Achsen (y) und (z) einen kartesischen Bezugspunkt bildet;
Mittel (31, 32) zum Spalten der Atomwolke in zwei Atompakete, Mittel (30) zum Bewegen der Pakete und zum Neukombinieren der beiden Pakete zu einer einzigen Atomwolke, wobei die Mittel zum Spalten und Verschieben im Wesentlichen einen ersten Leitungsdraht (30), einen zweiten Leitungsdraht (31) und einen dritten Leitungsdraht (32) im Wesentlichen parallel zueinander in der Zone der Falle umfassen, wobei der zweite Leitungsdraht und der dritte Leitungsdraht symmetrisch auf beiden Seiten des ersten Drahts angeordnet sind, wobei der zweite Draht und der dritte Draht von Wechselströmen $I_{RF}{}^{A}$ und $I_{RF}{}^{B}$ mit derselben Amplitude $I_0$, derselben Frequenz $\omega_{RF}$ und derselben Richtung durchflossen werden;
Mittel (6) zum optischen Messen der nach der Neukombination in die Atomwolke eingeführten Phasenverschiebung;
elektronische Mittel (8) zum Kontrollieren, Steuern und Regeln der verschiedenen Mittel des Gyrometers;
**dadurch gekennzeichnet, dass** die Realisierung einer Messung die folgenden Phasen beinhaltet:

Phase 1, Erzeugungsphase genannt: Erzeugen, Kühlen und Einfangen einer ultrakalten Atomwolke (10) in einem ersten vorbestimmten Abstand ($h_1$) von der ebenen Fläche in der Achse (y), wobei der Gleichstrom $I_{DC}{}^{A}$ eine erste Amplitude $I_{DC}{}^{1}$ hat;
Phase 2, Spaltphase genannt: progressives und gleichzeitiges Verstärken der Wechselströme $I_{RF}{}^{A}$ und $I_{RF}{}^{B}$, bis die Amplitude und die Frequenz der Ströme ausreichen, um in der Zone der Atomwolke ein Magnetfeld mit einer höheren Intensität als der Magnetintensität zu schaffen, die zum Spalten der Atomwolke in zwei Atompakete notwendig ist, wobei die beiden Pakete um einen bestimmten Abstand ($\delta$) in der Richtung (x) getrennt werden;
Phase 3, Durchlaufphase genannt: progressives Variieren der Amplitude des Gleichstroms $I_{DC}{}^{A}$ bis zu einer zweiten Amplitude $I_{DC}{}^{2}$, wobei der erste Abstand der Atompakete bis zu einem zweiten vorbestimmten Abstand ($h_2$) der ebenen Fläche in der Achse (y) variiert;
Phase 4, Neukombinationsphase genannt: Verringern der Amplitude der Wechselströme $I_{RF}{}^{A}$ und $I_{RF}{}^{B}$, um die beiden Atompakete zu einer einzigen phasenverschobenen Atomwolke zu gruppieren, wobei die beiden Pakete gemeinsam einen ersten geschlossenen Bereich zwischen der Spaltung und der Neukombination durchlaufen haben;
Phase 5, Messphase genannt: Messen der Phasenverschiebung durch die optischen Messmittel.

5. Verfahren zum Messen der Rotationsgeschwindigkeit und der Beschleunigung gemäß einer gegebenen Achse und Richtung mittels eines Sensors des Materiewellentyps, wobei der Sensor wenigstens Folgendes umfasst:

einen Mikrochip (3) mit einer Oberflächenebene;

Mittel zum Erzeugen, Erfassen und Kühlen (1, 2, 4) einer ersten Wolke mit ultrakalten Atomen (10) und eine erste Atomfalle (5), die es zulässt, die Wolke mit ultrakalten Atomen in einem vorbestimmten Abstand von der Oberflächenebene zu immobilisieren;

wobei die erste Falle wenigstens einerseits auf der ebenen Oberfläche integrierte Leitungsdrähte und andererseits externe Mittel zum Erzeugen eines Magnetfelds umfasst, das ein minimales lokales Magnetfeld ergibt, wobei die Wolke mit kalten Atomen von dem minimalen lokalen Magnetfeld eingefangen wird, wobei die Leitungsdrähte, die die Schaffung des minimalen lokalen Magnetfelds zulassen, in der Zone der ersten Falle gemäß einer Achse (z) parallel zu den Leistungsdrähten orientiert sind, wobei eine Achse (y) lotrecht zu der ebenen Fläche definiert wird, wobei eine Achse (x) lotrecht zu den Achsen (y) und (z) definiert wird und mit diesen beiden Achsen (y) und (z) einen kartesischen Bezugspunkt bildet;

erste Mittel (31, 32) zum Spalten der ersten Atomwolke in zwei Atompakete, erste Mittel (30) zum Verschieben der Pakete und des Neukombinierens der beiden Pakete zu einer einzigen ersten Atomwolke, wobei die Pakete zusammen einen ersten geschlossenen Bereich zwischen der Spaltung und der Neukombination durchlaufen haben, wobei jedes Paket, in dieser Reihenfolge, ein erstes Segment gemäß der Achse (x), ein zweites Segment gemäß der Achse (y) und ein drittes Segment gemäß der Achse (x) durchlaufen;

Mittel zum Erzeugen, Erfassen und Kühlen (1, 2, 4) wenigstens einer zweiten Wolke mit ultrakalten Atomen (10);

eine zweite Atomfalle, die es zulässt, die zweite Wolke mit ultrakalten Atomen in einem zweiten vorbestimmten Abstand ($h_2$) von der Oberflächenebene gemäß der Achse (y) zu immobilisieren;

wobei die zweite Falle (5) einerseits auf der ebenen Oberfläche integrierte Leitungsdrähte und andererseits externe Mittel zum Erzeugen eines Magnetfelds umfasst, das ein minimales lokales Magnetfeld ergibt, wobei die zweite Wolke mit kalten Atomen von dem minimalen lokalen Magnetfeld eingefangen wird, wobei die Leitungsdrähte, die die Schaffung des minimalen lokalen Magnetfelds zulassen, in der Zone der zweiten Falle gemäß der Achse (z) orientiert sind;

wobei die erste Falle einen ersten Leitungsdraht umfasst, der in den von einem ersten Gleichstrom $I_{DC}^A$ durchflossenen Chip integriert ist,

wobei die zweite Falle einen vierten Leitungsdraht (33) umfasst, der in den von einem Strom $I_{DC}^B$ durchflossenen Chip integriert ist;

wobei die erste Falle und die zweite Falle, als die externen Magnetfelderzeugungsmittel, Mittel zum Erzeugen eines homogenen Magnetfelds umfassen, dessen Feldlinien parallel zu der ebenen Fläche und lotrecht zur Richtung des ersten und des vierten Leitungsdrahts sind;

zweite Mittel zum Spalten der zweiten Atomwolke in zwei Atompakete, zweite Mittel zum Verschieben der Pakete, wobei die Mittel auch eine Neukombination der beiden Pakete zu einer einzigen zweiten Atomwolke zulassen, wobei die beiden Pakete gemeinsam einen zweiten geschlossenen Bereich zwischen der Spaltung und der Neukombination durchlaufen haben,

wobei der zweite Bereich mit dem ersten geschlossenen Bereich identisch ist, wobei die ersten und zweiten Mittel zum Spalten und Verschieben im Wesentlichen den ersten und den vierten Leistungsdraht (30, 33) umfassen, wobei ein zweiter, ein dritter und ein fünfter Leistungsdraht (31, 32, 34) im Wesentlichen parallel zueinander in der Zone der Falle sind, wobei der zweite und der dritte Leitungsdraht auf beiden Seiten des ersten Drahts symmetrisch angeordnet sind, wobei der dritte und der fünfte Leitungsdraht symmetrisch auf beiden Seiten des vierten Drahts angeordnet sind; wobei der zweite Draht, der dritte Draht und der fünfte Draht von Wechselströmen $I_{RF}^A$, $I_{RF}^B$ und $I_{RF}^C$ mit derselben Amplitude $I_0$, derselben Frequenz $\omega_{RF}$ und derselben Richtung durchflossen werden;

Mittel (6) zum optischen Messen der nach der Neukombination auf der ersten und zweiten Atomwolke eingeführten ersten und zweiten Phasenverschiebung;

elektronische Mittel (8) zum Kontrollieren, Steuern und Regeln der verschiedenen Mittel des Sensors, umfassend Funktionen, die es zulassen, wenigstens die Summe und die Differenz der ersten und zweiten Phasenverschiebung zu bilden;

**dadurch gekennzeichnet, dass** die Realisierung einer Messung die folgenden Phasen beinhaltet:

Phase 1, Erzeugungsphase genannt:

Erzeugen, Kühlen und Einfangen einer ersten Wolke (10) mit ultrakalten Atomen in einem ersten vorbestimmten Abstand ($h_1$) von der ebenen Oberfläche gemäß der Achse (y), wobei der Gleichstrom $I_{DC}^A$ eine erste Amplitude $I_{DC}^1$ hat;

Erzeugen, Kühlen und Einfangen einer zweiten Wolke mit ultrakalten Atomen in einem zweiten vorbestimmten Abstand ($h_2$) über der ebenen Fläche gemäß der Achse (y), wobei der zweite Gleichstrom $I_{DC}^B$ eine erste Amplitude $I_{DC}^2$ hat;

Phase 2, Spaltphase genannt: progressives und gleichzeitiges Verstärken der Wechselströme $I_{RF}^A$, $I_{RF}^B$ und $I_{RF}^C$, bis die Amplitude und die Frequenz der Ströme ausreichen, um in der Zone den beiden Atomwolken ein Magnetfeld mit einer höheren Intensität als der Magnetintensität zu erzeugen, die zum Spalten der beiden Atomwolken in zwei mal zwei Atompakete notwendig ist, wobei jedes der beiden Pakete durch einen selben bestimmten Abstand in der Richtung (x) getrennt ist;

Phase 3, Durchlaufphase genannt: progressives Variieren der Amplitude des ersten Gleichstroms $I_{DC}^A$ bis zur zweiten Amplitude $I_{DC}^2$, wobei der erste Abstand der aus der ersten Wolke stammenden Atompakete bis zum zweiten vorbestimmten Abstand von der ebenen Fläche variiert, und progressives Variieren der Amplitude des zweiten Gleichstroms $I_{DC}^B$ bis zur ersten Amplitude $I_{DC}^1$, wobei der zweite Abstand der von der zweiten Wolke stammenden Atompakete bis zum ersten vorbestimmten Abstand der ebenen Fläche variiert;

Phase 4, Neukombinationsphase genannt: Verringern der Amplitude der Wechselströme $I_{RF}^A$, $I_{RF}^B$ und $I_{RF}^C$, um die zwei mal zwei Atompakete zu zwei phasenverschobenen Atomwolken zu gruppieren, wobei die Pakete gemeinsam einen ersten geschlossenen Bereich und einen zweiten geschlossenen Bereich zwischen der Spaltung und der Neukombination durchlaufen haben, wobei die Durchlaufrichtung der von der ersten Wolke stammenden Atompakete durch den ersten Bereich umgekehrt zu der von der zweiten Wolke stammenden Atompakete durch den zweiten Bereich ist;

Phase 5, Messphase genannt: Messen der beiden erhaltenen Phasenverschiebungen auf der ersten Wolke und der zweiten Wolke durch die optischen Messmittel; Berechnen der Summe und der Differenz der ersten und zweiten Phasenverschiebung.

## Claims

1. Gyrometer, of the matter wave type, allowing the measurement of the rotation speed in accordance with a given measurement axis, the sensor comprising at least:

   one electronic chip (3) comprising a planar surface;
   generating, sensing and cooling means (1, 2, 4) for a cloud of ultra-cold atoms (10) and an atom trap (5) which allows the cloud of ultra-cold atoms to be fixed at a predetermined distance from the planar surface;
   the trap (5) comprising, on the one hand, conductive wires which are integrated in the planar surface and, on the other hand, external means for generating a magnetic field resulting in a magnetic field local minimum, the cloud of cold atoms being trapped by the magnetic field local minimum, the conductive wires which allow the generation of the magnetic field local minimum being orientated in the zone of the trap in accordance with an axis (z) which is parallel with the conductive wires, an axis (y) being defined so as to be perpendicular to the planar surface, an axis (x) being defined so as to be perpendicular to the axes (y) and (z) and forming with these two axes (y) and (z) a Cartesian reference system;
   means (7, 31, 32) for splitting the atomic cloud (10) into two packets of atoms, means (30) for moving the packets, the means also allowing the recombination of the two packets into a single atomic cloud, the entirety of the two packets having passed through a first closed area between the splitting and the recombination, each packet passing through, in this order, a first segment along the axis (x), a second segment along the axis (y) and a third segment along the axis (x);
   optical measuring means (6) for the phase shift introduced to the atomic cloud after recombination;
   electronic control, instruction and lock-in means (8) for the different means of the sensor;
   **characterised in that** the splitting means and movement means substantially comprise a first main conductive wire (30), through which a direct current $I_{DC}$ passes, a second conductive wire (31) and a third conductive wire (32) which are substantially parallel with each other in the zone of the trap, the second conductive wire and the third conductive wire which are arranged symmetrically at one side and the other of the first wire, the second wire and the third wire being passed through by alternating currents $I_{RF}^A$ and $I_{RF}^B$ having the same amplitude $I_O$, having the same frequency $\omega_{RF}$ and having the same direction, the maximum amplitude and the frequency of the currents being sufficient to produce, in the region of the atomic cloud, an alternating magnetic field having an intensity greater than the magnetic intensity necessary for splitting the atomic cloud into two atomic packets along the polarisation axis (x) of the field, the amplitude of the direct current $I_{DC}$ circulating in the first wire varying from $I_{DC}^1$ to $I_{DC}^2$ during the measurement so as to move the atoms along the axis (y),
   the electronic means (8) being configured to ensure the sequence of the four following variation phases of the different currents in the different conductive wires:

|  | Phase 1 | Phase 2 | Phase 3 | Phase 4 |
|---|---|---|---|---|
| $I_{DC}$ | $I_{DC}^1$ | $I_{DC}^1$ | $I_{DC}^1 \rightarrow I_{DC}^2$ | $I_{DC}^2$ |
| $I_{RF}^A$ | 0 | $0 \rightarrow I_0\cos(\omega_{RF}t)$ | $I_0\cos(\omega_{RF}t)$ | $I_0\cos(\omega_{RF}t) \rightarrow 0$ |
| $I_{RF}^B$ | 0 | $0 \rightarrow I_0\cos(\omega_{RF}t)$ | $I_0\cos(\omega_{RF}t)$ | $I_0\cos(\omega_{RF}t) \rightarrow 0$ |

**2.** Sensor of the matter wave type for measuring the rotation speed and acceleration along a given axis and direction, the sensor comprising at least:

one electronic chip (3) comprising a planar surface;
generating, sensing and cooling means (1, 2, 4) for a first cloud of ultra-cold atoms (10) and a first atom trap (5) which allows the first cloud of ultra-cold atoms to be fixed at a predetermined first distance from the planar surface;
the first trap (5) comprising, on the one hand, conductive wires which are integrated in the planar surface and, on the other hand, external means for generating a magnetic field resulting in a magnetic field local minimum, the first cloud of cold atoms being trapped by the magnetic field local minimum, the conductive wires which allow the generation of the magnetic field local minimum being orientated in the zone of the first trap in accordance with an axis (z) which is parallel with the conductive wires, an axis (y) being defined so as to be perpendicular to the planar surface, an axis (x) being defined so as to be perpendicular to the axes (y) and (z) and forming with these two axes (y) and (z) a Cartesian reference system;
first means (7, 31, 32) for splitting the first atomic cloud (10) into two packets of atoms, means (30) for moving the packets, the first means also allowing the recombination of the two packets into a single first atomic cloud, the entirety of the two packets having passed through a first closed area between the splitting and the recombination, each packet passing through, in this order, a first segment along the axis (x), a second segment along the axis (y) and a third segment along the axis (x);
generating, sensing and cooling means (1, 2, 4) for at least a second cloud of ultra-cold atoms (10);
a second atom trap (5) which allows the second cloud of ultra-cold atoms to be fixed at a predetermined second distance from the planar surface;
the second trap (5) comprising, on the one hand, conductive wires which are integrated in the planar surface and, on the other hand, external means for generating a magnetic field resulting in a magnetic field local minimum, the second cloud of cold atoms being trapped by the magnetic field local minimum the, the conductive wires which allow the generation of the magnetic field local minimum being orientated in the zone of the second trap in accordance with the axis (z);
the first trap comprising a first conductive wire (30) which is integrated in the chip and through which a first direct current $I_{DC}^A$ passes,
the second trap comprising a fourth conductive wire (33) which is integrated in the chip and through which a direct current $I_{DC}^B$ passes,
the first and the second traps comprising, as the external means for generating a magnetic field, means for generating a homogeneous magnetic field, the field lines of which are parallel with the planar surface and perpendicular to the direction of the first and fourth conductive wires;
second means (32, 34) for splitting the second atomic cloud into two atom packets, second means (33) for moving the packets, the means also allowing the recombination of the two packets into a single second atomic cloud, the entirety of the two packets having passed through a second closed area between the splitting and the recombination, the second area being identical to the first closed area;
optical measuring means (6) for the first and second phase shifts introduced to the first and second atomic clouds after recombination;
electronic control, instruction and lock-in means (8) for the different means of the sensor;
**characterised in that** the first and second splitting means and movement means substantially comprise the first and the fourth conductive wires, a second, third and fifth conductive wires (30, 31, 32, 33, 34) which are substantially parallel with each other in the zone of the two traps, the second conductive wire and the third conductive wire (31, 32) which are arranged symmetrically at one side and the other of the first wire (30), the third conductive wire and the fifth conductive wire (32, 34) which are arranged symmetrically at one side and the other of the fourth wire (33); the second wire, the third wire and the fifth wire being passed through by alternating currents $I_{RF}^A$, $I_{RF}^B$ and $I_{RF}^C$ having the same amplitude $I_0$, having the same frequency $\omega_{RF}$ and

having the same direction, the maximum amplitude and the frequency of the currents being sufficient to produce, in the region of the two atomic clouds, an alternating magnetic field having an intensity greater than the magnetic intensity necessary for splitting the atomic cloud into two atomic packets in the direction of the magnetic field, the amplitude of the direct current $I_{DC}^A$ varying from $I_{DC}^1$ to $I_{DC}^2$ and the amplitude of the direct current $I_{DC}^B$ varying from $I_{DC}^2$ to $I_{DC}^1$ during the measurement so as to move the atoms along the axis (y) in the opposite direction, the sensor comprising optical measuring means for the first and second phase shifts introduced to the first and second atomic clouds after recombination, the electronic means comprising functions which allow at least the total to be produced and the difference of the first and second phase shifts to be produced, the direction of travel of the first area by the packets of atoms from the first cloud being counter to that of the second area by the packets of atoms from the second cloud,

the electronic means (8) being configured to ensure the sequence of the four following variation phases of the different currents in the different conductive wires:

|  | Phase 1 | Phase 2 | Phase 3 | Phase 4 |
|---|---|---|---|---|
| $I_{DC}^A$ | $I_{DC}^1$ | $I_{DC}^1$ | $I_{DC}^1 \rightarrow I_{DC}^2$ | $I_{DC}^2$ |
| $I_{DC}^B$ | $I_{DC}^2$ | $I_{DC}^2$ | $I_{DC}^2 \rightarrow I_{DC}^1$ | $I_{DC}^1$ |
| $I_{RF}^A$ | 0 | $0 \rightarrow I_0\cos(\omega_{RF}t)$ | $I_0\cos(\omega_{RF}t)$ | $I_0\cos(\omega_{RF}t) \rightarrow 0$ |
| $I_{RF}^B$ | 0 | $0 \rightarrow I_0\cos(\omega_{RF}t)$ | $I_0\cos(\omega_{RF}t)$ | $I_0\cos(\omega_{RF}t) \rightarrow 0$ |
| $I_{RF}^C$ | 0 | $0 \rightarrow I_0\cos(\omega_{RF}t)$ | $I_0\cos(\omega_{RF}t)$ | $I_0\cos(\omega_{RF}t) \rightarrow 0$ |

3. Sensor according to either claim 1 or claim 2, **characterised in that** the cooling means for the cloud of ultra-cold atoms and the atom trap are arranged so that the cloud(s) of atoms is/are Bose-Einstein condensates.

4. Method for measuring a rotation speed about a given axis by means of a gyrometer, of the matter wave type, the gyrometer comprising at least:

one electronic chip (3) comprising a planar surface;
generating, sensing and cooling means (1, 2, 4) for a cloud of ultra-cold atoms (10) and an atom trap (5) which allows the cloud of ultra-cold atoms to be fixed at a predetermined distance from the planar surface;
the trap comprising, on the one hand, conductive wires which are integrated in the planar surface and, on the other hand, external means for generating a magnetic field resulting in a magnetic field local minimum, the cloud of cold atoms being trapped by the magnetic field local minimum, the conductive wires which allow the generation of the magnetic field local minimum being orientated in the zone of the trap in accordance with an axis (z) which is parallel with the conductive wire, an axis (y) being defined so as to be perpendicular to the planar surface, an axis (x) being defined so as to be perpendicular to the axes (y) and (z) and forming with these two axes (y) and (z) a Cartesian reference system;
means (31, 32) for splitting the atomic cloud (10) into two packets of atoms, means (30) for moving the packets and for recombining the two packets into a single atomic cloud, the splitting means and movement means substantially comprising a first conductive wire (30), a second conductive wire (31) and a third conductive wire (32) which are substantially parallel with each other in the zone of the trap, the second conductive wire and the third conductive wire which are arranged symmetrically at one side and the other of the first wire, the second wire and the third wire being passed through by alternating currents $I_{RF}^A$ and $I_{RF}^B$ having the same amplitude $I_O$, having the same frequency $\omega_{RF}$ and having the same direction;
optical measuring means (6) for the phase shift introduced to the atomic cloud after recombination;
electronic control, instruction and lock-in means (8) for the different means of the gyrometer;
**characterised in that** carrying out a measurement comprises the following steps:

Step 1, referred to as the generation step: generating, cooling and trapping a cloud of ultra-cold atoms (10) at a first predetermined distance ($h_1$) from the planar surface along the axis (y), the direct current $I_{DC}^A$ having a first amplitude $I_{DC}^1$;
Step 2, referred to as the splitting step: progressive and simultaneous increase of the alternating currents $I_{RF}^A$ and $I_{RF}^B$ until the amplitude and the frequency of the currents are sufficient to produce, in the region of the atomic cloud, a magnetic field having an intensity greater than the magnetic intensity necessary for splitting the atomic cloud into two atomic packets, the two packets being separated by a predetermined

spacing ($\delta$) in the direction (x);

Step 3, referred to as the passage step: progressive variation of the amplitude of the direct current $I_{DC}{}^A$ up to a second amplitude $I_{DC}{}^2$, the first distance of the packets of atoms varying up to a second predetermined distance ($h_2$) from the planar surface along the axis (y);

Step 4, referred to as the recombination step: decrease of the amplitude of the alternating currents $I_{RF}{}^A$ and $I_{RF}{}^B$ in order to merge the two atomic packets into a single atomic cloud which is out of phase, the entirety of the two packets having passed through a first closed area between the splitting and the recombination;

Step 5, referred to as the measurement step: measuring the phase shift by the optical measuring means.

5. Method for measuring the rotation speed and acceleration along a given axis and direction by means of a sensor, of the matter wave type, the sensor comprising at least:

one electronic chip (3) comprising a planar surface;

generating, sensing and cooling means (1, 2, 4) for a first cloud of ultra-cold atoms (10) and a first atom trap (5) which allows the first cloud of ultra-cold atoms to be fixed at a first predetermined distance from the planar surface;

the first trap comprising at least, on the one hand, conductive wires which are integrated in the planar surface and, on the other hand, external means for generating a magnetic field resulting in a magnetic field local minimum, the cloud of cold atoms being trapped by the magnetic field local minimum, the conductive wires which allow the generation of the magnetic field local minimum being orientated in the zone of the trap in accordance with an axis (z) which is parallel with the conductive wires, an axis (y) being defined so as to be perpendicular to the planar surface, an axis (x) being defined so as to be perpendicular to the axes (y) and (z) and forming with these two axes (y) and (z) a Cartesian reference system;

first means (31, 32) for splitting the first atomic cloud into two packets of atoms, first means (30) for moving the packets and for recombining the two packets into a single first atomic cloud, the entirety of the two packets having passed through a first closed area between the splitting and the recombination, each packet passing through, in this order, a first segment along the axis (x), a second segment along the axis (y) and a third segment along the axis (x);

generating, sensing and cooling means (1, 2, 4) for at least a second cloud of ultra-cold atoms;

a second atom trap which allows the second cloud of ultra-cold atoms to be fixed at a predetermined second distance ($h_2$) from the planar surface along the axis (y);

the second trap (5) comprising, on the one hand, conductive wires which are integrated in the planar surface and, on the other hand, external means for generating a magnetic field resulting in a magnetic field local minimum, the second cloud of cold atoms being trapped by the magnetic field local minimum, the conductive wires which allow the generation of the magnetic field local minimum being orientated in the zone of the second trap in accordance with the axis (z);

the first trap comprising a first conductive wire which is integrated in the chip and through which a first direct current $I_{DC}{}^A$ passes,

the second trap comprising a fourth conductive wire (33) which is integrated in the chip and through which a current $I_{DC}{}^B$ passes,

the first and the second traps comprising, as the external means for generating a magnetic field, means for generating a homogeneous magnetic field, the field lines of which are parallel with the planar surface and perpendicular to the direction of the first and fourth conductive wires;

second means for splitting the second atomic cloud into two atom packets, second means for moving the packets, the means also allowing the recombination of the two packets into a single second atomic cloud, the entirety of the two packets having passed through a second closed area between the splitting and the recombination,

the second area being identical to the first closed area, the first and second splitting and moving means substantially comprising the first and fourth conductive wires (30, 33), a second, third and fifth conductive wire (31, 32, 34) which are substantially parallel with each other in the zone of the trap, the second conductive wire and the third conductive wire which are arranged symmetrically at one side and the other of the first wire, the third conductive wire and the fifth conductive wire which are arranged symmetrically at one side and the other of the fourth wire; the second wire, third wire and fifth wire being passed through by alternating currents $I_{RF}{}^A$ and $I_{RF}{}^B$ and $I_{RF}{}^C$ having the same amplitude $I_O$, having the same frequency $\omega_{RF}$ and having the same direction;

optical measuring means (6) for the first and second phase shifts introduced to the first and second atomic clouds after recombination;

electronic control, instruction and lock-in means (8) for the different means of the sensor, comprising functions which allow at least the total to be produced and the difference of the first and second phase shifts to be produced; **characterised in that** carrying out a measurement comprises the following steps:

Step 1, referred to as the generation step:

generating, cooling and trapping a first cloud of ultra-cold atoms (10) at a first predetermined distance ($h_1$) from the planar surface along the axis (y), the direct current $I_{DC}^A$ having a first amplitude $I_{DC}^1$; generating, cooling and trapping a second cloud of ultra-cold atoms at a second predetermined distance ($h_2$) above the planar surface along the axis (y), the second direct current $I_{DC}^B$ having a first amplitude $I_{DC}^2$;

Step 2, referred to as the splitting step: progressive and simultaneous increase of the alternating currents $I_{RF}^A$, $I_{RF}^B$ and $I_{RF}^C$ until the amplitude and the frequency of the currents are sufficient to produce, in the region of the two atomic clouds, a magnetic field having an intensity greater than the magnetic intensity necessary for splitting the two atomic clouds into two times two atomic packets, each set of two packets being separated by the same predetermined spacing in the direction (x);

Step 3, referred to as the passage step: progressive variation of the amplitude of the first direct current $I_{DC}^A$ up to the second amplitude $I_{DC}^2$, the first distance of the packets of atoms from the first cloud varying up to the second predetermined distance at the planar surface and progressive variation of the amplitude of the second direct current $I_{DC}^B$ up to the first amplitude $I_{DC}^1$, the second distance of the packets of atoms from the second cloud varying up to the first predetermined distance from the planar surface;

Step 4, referred to as the recombination step: decrease of the amplitude of the alternating currents $I_{RF}^A$, $I_{RF}^B$ and $I_{RF}^C$ in order to merge the two times two atomic packets into two atomic clouds which are out of phase, the entirety of the packets having passed through a first closed area and a second closed area between the splitting and the recombination, the direction of travel of the first area by the packets of atoms from the first cloud being counter to that of the second area by the packets of atoms from the second cloud,

Step 5, referred to as the measurement step: measuring the two phase shifts obtained at the first cloud and second cloud by the optical measuring means; calculating the total and the difference of the first and second phase shifts.

FIG. 1

# FIG. 2a

# FIG. 2b

FIG. 3

FIG. 4

FIG.5a

FIG. 5b

FIG.5c

$I_{RF}^{\ B}$       $I_{DC}$       $I_{RF}^{\ A}$

$I_{DC}=I_{DC}^{\ 2}$
$B_{RF}<B_{C}$

FIG. 5d

$I_{RF}^{\ B}$       $I_{DC}$       $I_{RF}^{\ A}$

FIG. 5e

$I_{RF}{}^{A}$ $\quad$ $I_{DC}{}^{A}$ $\quad$ $I_{RF}{}^{B}$ $\quad$ $I_{DC}{}^{B}$ $\quad$ $I_{RF}{}^{C}$

3

31 $\quad$ 10 $\quad$ 30 $\quad$ 32 $\quad$ 33 $\quad$ 34

10

10

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **T. GUSTAVSON et al.** *Phys. Rev. Lett.,* 1997, vol. 78
- **D. DURFEE et al.** *Phys. Rev. Lett.,* 2006, vol. 97, 240801
- **O. ZOBAY ; B. GARRAWAY.** Two-Dimensional Atom Trapping in Field-Induced Adiabatic Potentials. *Physical Review Letters,* 2001, vol. 86, 1195-1198
- **T. SCHUMM et al.** Matter-wave interferometry in a double well on an atom chip. *Nature Physics,* 2005, vol. 1, 57-62
- Bose-Einstein interferometry and its applications to précision undersea navigation. **ZATEZALO A et al.** POSITION, LOCATION AND NAVIGATION SYMPOSIUM. IEEE, 05 Mai 2008, 940-950

- **S. DU et al.** Atom-chip Bose-Einstein condensation in a portable vacuum cell. *Physical Review,* 2004, vol. A 70, 053606
- **R. FOLMAN et al.** Microscopic atom optics: from wires to an atom chips. *Advances in Atomic, Molecular, and Optical Physics,* 2002, vol. 48, 263-356
- **LESANOVSKY et al.** Adiabatic radio-frequency potentials for the coherent manipulation of matter waves. *Physical Review,* 2006, vol. A 73, 033619